(19) **Europäisches Patentamt / European Patent Office / Office européen des brevets**

(11) **EP 3 516 272 B2**

(12) # NEUE EUROPÄISCHE PATENTSCHRIFT
## Nach dem Einspruchsverfahren

(45) Veröffentlichungstag und Bekanntmachung des Hinweises auf die Entscheidung über den Einspruch:
**16.04.2025 Patentblatt 2025/16**

(45) Hinweis auf die Patenterteilung:
**01.12.2021 Patentblatt 2021/48**

(21) Anmeldenummer: **17772699.9**

(22) Anmeldetag: **26.09.2017**

(51) Internationale Patentklassifikation (IPC):
**F16H 61/688** (2006.01) **F16H 61/02** (2006.01)
**F16H 61/00** (2006.01)

(52) Gemeinsame Patentklassifikation (CPC):
**F16H 61/688; F16H 61/0025; F16H 61/0206;**
F16H 2061/0037

(86) Internationale Anmeldenummer:
**PCT/EP2017/074334**

(87) Internationale Veröffentlichungsnummer:
**WO 2018/055192 (29.03.2018 Gazette 2018/13)**

(54) **Verfahren zur Getriebesteuerung mit einer hydraulischen Schaltung**

Method for transmission control with a hydraulic circuit

Méthode de contrôle de transmission avec un circuit hydraulique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.09.2016 DE 202016105346 U**

(43) Veröffentlichungstag der Anmeldung:
**31.07.2019 Patentblatt 2019/31**

(73) Patentinhaber: **hofer powertrain innovation GmbH**
**72622 Nürtingen (DE)**

(72) Erfinder:
• **WILD, Andreas**
  **72669 Unterensingen (DE)**

• **KEHRER, Marcus**
  **72622 Nürtingen (DE)**
• **UNRUH, Swen**
  **72581 Dettingen (DE)**
• **EBINGER, Günter**
  **76684 Östringen (DE)**

(74) Vertreter: **Cremer & Cremer**
**Patentanwälte**
**St.-Barbara-Straße 16**
**89077 Ulm (DE)**

(56) Entgegenhaltungen:
DE-A1- 102005 015 911   DE-A1- 102011 100 862
DE-A1- 102013 008 740   DE-A1- 4 004 854
US-A1- 2013 037 144

EP 3 516 272 B2

**Beschreibung**

Die vorliegende Erfindung behandelt ein Verfahren für eine Getriebesteuerung, in der hydraulische Flüsse unterschiedlich priorisiert werden können. Mit einer solchen Hydraulik kann z. B. eine Gruppe aus wenigstens zwei Kupplungsaktuatoren versorgt werden. Des Weiteren behandelt die vorliegende Erfindung das Verfahren, z. B. unter Nutzung eines Ventils, wie mittels einer Hydraulikschaltung unterschiedliche Versorgungen, insbesondere für unterschiedliche Bereiche der hydraulischen Schaltung, realisiert werden können.

Mit anderen Worten, die vorliegende Erfindung behandelt ein Verfahren zur Getriebesteuerung mit einer entsprechenden hydraulischen Schaltung nach dem Oberbegriff von Anspruch 1.

**Technisches Gebiet**

In Kraftfahrzeugen mit einem Verbrennungsmotor als Antriebsaggregat werden - insbesondere bei luxuriöseren Fahrzeugen - gerne Doppelkupplungsgetriebe eingebaut, die ein erstes Teilgetriebe und zweites Teilgetriebe aufweisen. Bei Schaltvorgängen, durch die z. B. ein Wechsel von einem eingelegten geraden Gang des Getriebes zu einem ungeraden Gang des Getriebes erfolgt, werden die Kupplungen, von denen jeweils eine einem Teilgetriebe zugeordnet ist, wechselweise betätigt. Als besonders zuverlässig hat es sich dabei herausgestellt, die Kupplungen jeweils durch hydraulisch ansteuerbare Kupplungsaktuatoren einzurücken bzw. auszurücken. Mithilfe von hydraulischen Versorgungszweigen (hydraulischer Strang), die an eine, ggf. aus mehreren Druckerzeugern bestehende, hydraulische Druckquelle zur Bereitstellung von Hydraulikmittel unter Druck angeschlossen sind, lassen sich die Kupplungen über Kupplungsaktuatoren mit einem jeweils erforderlichen Druck betätigen. Entsprechende Beschreibungen mit einem Schwerpunkt auf der hydraulischen Steuerung sind z. B. der DE 20 2016 105 346.3 (Anmelderin: hofer mechatronik GmbH; Anmeldetag: 26.09.2016), der DE 20 2016 105 345.5 (Anmelderin: hofer mechatronik GmbH; Anmeldetag: 26.09.2016) und der DE 10 2010 036 545.9 (Anmelderin: hofer mechatronik GmbH; Anmeldetag: 21.07.2010) entnehmbar. Die Druckschriften gelten mit ihren Benennungen vollinhaltlich in vorliegende Erfindungsbeschreibung in Bezug auf die allgemeinen Darlegungen zu Doppelkupplungsgetrieben und ihren hydraulischen Ansteuerungen inkludiert.

In solchen hydraulischen Schaltungen kommen hydraulisch unterschiedlich arbeitende Funktionsgruppen und Bereiche zusammen, die sogar zum Teil auf unterschiedlichen Druckniveaus betrieben werden. Alle Schaltungsteile werden von einem oder einer Gruppe von Druckerzeugern mit einem Hydraulikmittel versorgt. Stromabwärts von dem oder den Druckerzeugern muss eine geeignete Aufteilung der hydraulischen Flüsse sichergestellt werden.

Leitungen und einzelne Steuerglieder, manchmal sogar auch einzelne Stellglieder als Teile der Schaltung (Schaltungsteile) können in einer gemeinsamen Steuerplatte zusammengefasst werden, die eine kompakte Baugruppe, Untereinheit oder sogar auch eine komplette Getriebesteuerung bilden kann.

**Stand der Technik**

Aus der Patentschrift DE 10 2006 016 397 B4 (Inhaberin: hofer mechatronik GmbH; Anmeldetag: 07.04.2006) ist ein entsprechendes Schaltgetriebe und ein Verfahren zur Steuerung des Getriebes für ein Kraftfahrzeug bekannt, dass auch Schaltungsteile zeigt, die eine Aufteilung des Hydraulikmittelflusses bewirken. Die Hydraulik zur Steuerung des Getriebes wird von einer verbrennungsmaschinenangetriebenen Pumpe in Verbindung mit einem Druckspeicher versorgt. Ein als Hauptdruckregler bezeichnetes Ventil arbeitet mit einem als Druckwaage bezeichneten Ventil zusammen, wobei die Druckwaage jeweils von einer ersten Kupplung und einer zweiten Kupplung einen Aktionsdruck abnimmt und den jeweils höheren Druck dem Hauptdruckregler ansteuerseitig zuführt. Dabei sind von dem Hauptdruckregler zwei Schaltstellungen einnehmbar, von denen eine erste Stellung dazu dient, sowohl die beiden Kupplungen als auch die vorhandenen Schaltmuffen mit dem aus der mechanischen Pumpe bereitgestellten Druck zu versorgen. In einer zweiten Schaltstellung des Hauptdruckreglers, die in Abhängigkeit von einem verminderten Versorgungsdruck aus der Druckquelle einnehmbar ist, wird der Versorgungsdruck über den Hauptdruckregler nur den beiden Kupplungen zugeführt, sodass zumindest eine der Kupplungen über den jeweiligen Kupplungsdruckregler und ein jeweiliges Druckerhaltungsventil aktuierbar ist bzw. in einer (kraftflussmäßigen) Schlussstellung verbleibt. Hierbei wird, anders gesagt, eine Versorgung der Kupplung(en) ein Vorrang gegenüber einer Versorgung der Schaltmuffen mit Drucköl eingeräumt.

Die Patentanmeldung EP 2 557 336 A2 (Anmelderin: hofer mechatronik GmbH; Prioritätstage: 21.07.2010, 31.08.2010) widmet sich einer weiterentwickelten Getriebehydraulik eines Doppelkupplungsgetriebes. Die hydraulische Steuerung für die Doppelkupplung umfasst hierbei einen Drucköl-Wärmetauscher. Ein so genanntes Drucköl-Umlaufventil, das der hydraulischen Pumpe nachgeschaltet ist, sorgt bei einer ausreichenden hydraulischen Druckzufuhr zu den Aktuatorenzweigen (den Strängen) der beiden Kupplungen der Doppelkupplung dafür, dass Hydraulikmittel über einen Wärmetauscher abfließen kann und über weiteren Ölkreislauf gekühlt zu nachgeschalteten Verbrauchern, z. B. für die Beölung von Getriebezahnrädern, gelangt. Somit wird durch das Druckölumlaufventil eine Druckversorgung für die Ansteuerung der Kupplungen der Vorrang gegeben gegenüber einem Kühl- bzw. mit der Kühlung gekoppelten Beölungskreislauf. Der Schaltpunkt des Druckölumlaufventils ist durch einen Hauptdruckregler einstellbar. In einer weiteren Schaltstellung des Druckölumlaufventils, die bei höchsten Pumpendrücken einnehmbar ist, öffnet sich zur Entlastung über ein Kühlölstromventil eine Rückflussleitung zum Eingang der Pumpe hin.

Gemäß der WO 2011/015 182 A1 (Anmelderin: Schaeffler Technologies GmbH & Co. KG; Prioritätstage: 06.08.2009, 26.11.2009) bzw. die auf die gleichen inneren Prioritäten gestützte Anmeldung DE 10 2010 032 657 A1 wird mittels eines Kühlölstrompriorisierungsventils, das in der dort vorgestellten hydraulischen Schaltung den Kupplungen vorgeschaltet ist und einem Speicherladeventil nachgeschaltet ist, ein Volumenstrom auf die jeweils mehr beanspruchte, z. B. die jeweils betätigte der Kupplungen priorisiert. An dem Kühlölstrompriorisierungsventil sind zwei gegeneinander wirkende Druckflächen vorhanden, auf die jeweils ein Kupplungsbetätigungsdruck von Betätigungszylindern der Kupplungen geschaltet ist.

Die WO 2012/152 397 A1 (Anmelderin: Audi AG; Prioritätstag: 06.05.2011) stellt eine hydraulische Schaltung eines Doppelkupplungsgetriebes mit zwei Pumpen vor, die auf einer gemeinsamen Welle angeordnet von einem einzigen Elektromotor angetrieben sind. Die Pumpen sollen von dem Elektromotor drehzahlgeregelt betrieben werden. Durch die Ausbildung eines Steuerventils als Volumensteuerventil in Gestalt eines Schaltventils soll zunächst kein Einfluss auf den Hydraulikmittelstrom genommen werden können. Durch das Vorsehen des Elektromotors soll die Leistung der Pumpen und somit das Fördervolumen und die daraus resultierende Menge an gefördertem Hydraulikmedium einstellbar sein. Um es konkreter auszudrücken, laut der Beschreibung der WO 2012/152 397 A1 ist ein 5/2-Wegeventil hinter einer der Pumpen einzusetzen. Über das 5/2-Wegeventil kann Hydraulikmittel in einen Druckspeicher geleitet werden. In einem zweiten Schaltzustand des 5/2-Wegeventils wird ein erster Anschluss des Ventils mit einem zweiten Anschluss des Ventils derart verbunden, dass die dadurch hergestellte Leitung zu einem Hydraulikteilkreis führt, der der Kühlung von Kupplungen des Doppelkupplungsgetriebes dient. Hierbei ist aus der den Sachverhalt darstellenden Figur zu entnehmen, dass in diesem Schaltzustand des 5/2-Wegeventils die Hochdruckseite der ersten Pumpe mit der Hochdruckseite der zweiten Pumpe verbunden wird. Demnach liegen die Pumpen auf dem gleichen Druckniveau. Offensichtlich verhindert das vorhandene Lade-Druck-System, in der Schaltung Arbeiten auf Basis verschiedener Druckniveaus umzusetzen, denn für einen solchen Fall müssten mehrere Lade-Druck-Systeme entworfen werden.

In der DE 10 2013 008 740 A1 (Anmelderin: Audi AG; Anmeldetag: 23.05.2013) wird ein Hydrauliksystem für ein Automatikgetriebe eines Kraftfahrzeugs beschrieben. Das System weist einen Hochdruckkreislauf für Kupplungen und Aktuatoren des Kraftfahrzeugs und einen Niederdruckkreislauf zum Kühlen der Kupplungen auf. Die Kreisläufe sollen gemeinsam antreibbare Pumpen, genauer eine Kühl-Hydraulikpumpe und eine Lade-Hydraulikpumpe aufweisen. Eine Steuereinrichtung kann die Motordrehzahl des Antriebsmotors der Pumpen nach Bedarf absenken. Ein Steuerventil erlaubt es, abströmseitig von der Lade-Hydraulikpumpe eine Verbindung zu einem Sumpf herzustellen. Ein Verteilerventil ermöglicht es, einen Durchfluss von der Kühl-Hydraulikpumpe zu einer ersten Kupplung oder zu einer zweiten Kupplung einzustellen.

In dem Schaltplan gemäß der DE 10 2011 100 862 A1 (Anmelderin: Audi AG; Anmeldetag: 06.05.2011) kommt ein Volumensteuerventil mit zwei Extremalstellungen zur Versorgung einer jeweils zugeordneten Kupplung zum Einsatz. Hierbei soll ein Gesamtdurchströmungsquerschnitt bedarfsgerecht auf zwei Kupplungen aufgeteilt werden können. Ein Schaltventil dient in einem Schaltzustand zum Aufladen eines Druckspeichers und in einem weiteren Schaltzustand zur Versorgung eines Hydraulikteilkreises.

Gemäß der DE 10 2005 015 911 A1 (Anmelderin: Volkswagen AG; Anmeldetag: 07.04.2005) soll ein Hydrauliksystem mindestens vier Hydraulik-Teilkreisläufe umfassen, die zur Versorgung von mindestens einer Kupplung, zur Versorgung von mindestens einem Gangsteller, zur Steuerung einer Kupplungskühlung und zur Schmierung verschiedener Getriebekomponenten dienen sollen. Der Zulauf in die Teilkreisläufe erfolgt gemeinsam über einen Kühler, ggf. auch über einen Filter, dem ein Hauptdruckventil für die Steuerung des jeweiligen Zulaufs nachgeschaltet ist. Eine Besonderheit sei darin zu sehen, dass das Hauptdruckventil eine Rangfolgenschaltung aufweist, die eine Priorisierung ermöglicht. Ein Hauptdruckvorsteuerventil dient zudem dazu, den Öldruck nach der Pumpe zu verteilen. Allerdings dürften unterschiedliche Arbeitsdrücke nicht durch die Stellung des Kolbens eines einzigen Ventils verstellbar sein.

Die zuvor genannten Druckschriften gelten mit ihren Benennungen als vollumfänglich in vorliegende Erfindungsbeschreibung inkorporiert. Hierdurch soll vermieden werden, nicht mehr erneut und wiederholt allgemein bekannte Zusammenhänge zwischen Getriebesteuerungen und Antriebssträngen, insbesondere mit Doppelkupplungsgetrieben, zu erörtern, sondern durch Verweis auf die Druckschriften als ebenfalls definiert für vorliegende Erfindung ansehen zu dürfen.

## Aufgabenstellung

In einem Kraftfahrzeug sollen möglichst alle Antriebsstrangteile im hohen Maße effizient sein. Ein Ansatz besteht darin, keine nicht benötigten Drücke aufzubauen, wenn mit niedrigeren Drücken innerhalb einer Hydraulik die gleichen Effekte und Arbeitsergebnisse erzielt werden können. Nun gibt es aber Komponenten, z. B. Kupplungsakutatoren, die einen Mindestdruck einfordern, der höher ist als er für andere Aufgaben benötigt wird, z. B. für das Schmieren des Getriebes. Wie sich aus der bisherigen Schutzrechtsliteratur entnehmen lässt, schrecken viele Hydraulikentwickler davor zurück, mit mehreren Druckniveaus eine Getriebesteuerung, insbesondere für ein Doppelkupplungsgetriebe, umzusetzen, weil die mehreren Hydraulikkreise die hydraulische Schaltung aufwendig, fehleranfällig und aufgrund der erhöhten Anzahl an Teilen auch teurer machen.

In dieser Situation ist es erstrebenswert, eine Möglichkeit zu finden, wie bedarfsabhängige Druckniveaus in ein und dergleichen Hydraulikschaltung realisiert werden können, ohne dass diese Idee wesentlich zur Komplexitätssteigerung der hydraulischen Getriebesteuerung beiträgt.

## Erfindungsbeschreibung

Die erfindungsgemäße Aufgabe wird durch ein geeignetes Betriebsverfahren nach Anspruch 1 gelöst. Vorteilhafte Weiterbildungen lassen sich den abhängigen Ansprüchen entnehmen.

Eine mit einem Hydraulikmittel arbeitende Schaltung hat die Aufgabe, mittels Druck des Hydraulikmittels Stellorgane bzw. Stellglieder nach vorgegebenen Schaltmustern, z. B. aus einem Getriebesteuergerät, zu betätigen. Durch Arbeitsdrücke werden die Stellglieder betätigt. Sie operieren in Übereinstimmung mit dem Druck an ihnen. Die Stellglieder der hydraulischen Schaltung sind für eine Betätigung von Getriebekomponenten wie Kupplungen in der hydraulischen Schaltung da. Solche hydraulischen Schaltungen können insbesondere bei Doppelkupplungen oder Antriebssträngen mit mehr als zwei Reibkupplungen ihre Vorteile ausspielen. Unter Nutzung des unter Druck stehenden Hydraulikmittels sind einzelne Komponenten der Getriebesteuerung ansteuerbar.

Außerdem dient das Hydraulikmittel noch dazu, einzelne Teile des Getriebes entweder zu kühlen oder zu schmieren, idealerweise sogar beides. Das Hydraulikmittel soll - in diesem Fall - auch noch als Mittel der Kühlung und als Mittel der Schmierung einzelner Getriebekomponenten verteilbar sein.

Ob ausreichend Hydraulikmittel zur Verfügung steht, hängt unter anderem davon ab, wie der "Verbrauch" unmittelbar vor dem aktuell anstehenden Verbrauch war. Bei Schaltungen, die ohne größeres Reservoir auskommen, muss das Liefervermögen der Druckerzeuger den Bedarf befriedigen können. Idealerweise ist die Pumpengruppe bzw. die Druckerzeugungsgruppe aber nur für einen mittleren Bedarf dimensioniert, d. h. für den Bedarf an Hydraulikmittel, der sich über einen längeren Zeitraum im Mittel einstellt. Ein Bereich in einer Getriebehydraulik, der besondere Anforderungen an die Menge des zur Verfügung stehenden Hydraulikmittels macht, ist die Kupplungssteuerung. Sind mehrere Kupplungen vorhanden (z. B. bei einem Hybridantriebsstrang, z. B. bei einem Doppelkupplungsgetriebe, z. B. bei einem Antriebsstrang, der ein Hybridantriebsstrang mit einem Doppelkupplungsgetriebe ist), so nimmt erfahrungsgemäß das Volumen bzw. das unter Druck stehende, schaltvorgangsweise benötigte Hydraulikmittel noch zu, denn jeder Schaltwechsel und jede Kupplungsbetätigung "verbraucht" ihr Quäntchen Hydraulikmittel, indem nach dem Schaltvorgang, also am Ende das für die Betätigung in einen Verbraucher eingeleitetes Hydraulikmittel in Richtung Tank bzw. zum Reservoir abgeleitet wird. Zur Kupplungsbetätigung werden häufig höhere Drücke benötigt als für sonstige Stellglieder des Getriebes. Auf der anderen Seite sind Kupplungen bei Getrieben wie Vorgelegegetriebe wichtige Bauteile für last- und damit zerstörungsfreie Schaltwechsel.

In dieser Situation kann mittels einer Vorrangschaltung ein Vorzug der Kupplung oder den Kupplungen eingeräumt werden. Reicht das Hydraulikmittel bzw. das Druckniveau in der hydraulischen Schaltung aus, so können noch andere Verbraucher mit Hydraulikmittel versorgt werden, deren permanente Versorgung aber nicht (fortwährend) sichergestellt werden muss. Z. B. kann eine Kühlung auch einmal kurzzeitig ausgesetzt werden, wenn stattdessen während eines Beschleunigungsvorgangs des Kraftfahrzeugs dem gesamten Schaltvorgang, d. h. den Kupplungen und zugehörigen Gangstellern ein Vorrang eingeräumt wird. Die Priorisierung hydraulischer Flüsse kann in Abhängigkeit einer Schaltstellung wenigstens eines Ventils bestimmt bzw. eingestellt werden. Ein Ventil beeinflusst, in welchen Teilen der hydraulischen Schaltung zunächst einmal Hydraulikmittel angeboten bzw. zur Verfügung gestellt wird. Ein solches Ventil kann die Funktion eines Kupplungssteuerventils übernehmen.

Eine Vorrangschaltung kann z. B. anhand eines Zustands eines einzigen Ventils festgelegt werden, das z. B. als Kupplungs-Cut-Off-Ventil oder als Kupplungssteuerventil bezeichnet werden kann. Durch eine Stellung eines Kolbens (Kolbenstellung) eines einzigen Ventils, z. B. eines ersten Vorrangwegeventils, lässt sich ein Arbeitsdruck an einer Baugruppe der Hydraulikschaltung aufschalten. Darüber hinaus kann mittels demselben, d. h. dem gleichen Ventil auch noch ein Fluss eines Hydraulikmittels gesteuert werden. Der Fluss des Hydraulikmittels kann durch ein Hydraulikmittel gebildet sein, das mit einem vom Arbeitsdruck abweichenden Druckniveau über das Ventil zur Verfügung steht. Das abweichende Druckniveau kann insbesondere ein niedrigeres Druckniveau sein. In einem solchen Fall haben zwar beide Teile der Schaltung bzw. des Getriebes, von dem die Schaltung ein Teil ist, jeweils einen bedruckten Hydraulikmittelstrom, jedoch wird jeder Arbeitsbereich mit einem solchen Hydraulikmittelstrom ausgestattet, der ein möglichst niedriges Druckniveau aufweist. Das Ventil bzw. Vorrangschaltung steuert, welche Drücke weitergeleitet werden. Hierbei wird nur so viel Energie für den Aufbau von Druckniveaus aufgewendet, wie tatsächlich benötigt wird, dies ist z. B. durch gesteuerte Druckerzeuger wie eine drehzahlgesteuerte, elektromotorisch angetriebene Flügelzellenpumpe veränderlich und einstellbar.

Das Ventil ist ein Kolbenschieberventil, das wenigstens zwei Arbeitsports hat. Auch ist das Ventil mit wenigstens zwei Druckversorgungsports ausgestattet.

Eine solche Hydraulikschaltung kann auf eine bestimmte Weise betrieben werden. Das Verfahren zur Getriebesteuerung operiert mit einem aktiven Ansteuern. Wenigstens ein Vorrangwegeventil, das weiter oben auch als Kupplungssteuerventil bzw. auch als Kupplungs-Cut-Off-Ventil bezeichnet worden ist, wird angesteuert. Vorteilhafterweise ist das Vorrangwegeventil so aufgebaut, dass ein sukzessives Verschließen von wenigstens zwei Arbeitsports stattfindet, wenn ein Kolben des Ventils verschoben wird. Es findet ein sukzessives Verschließen der Arbeitsports statt. Ein Arbeitsport, der für eine Betätigung von Kupplungen, zumindest von einer Kupplung, zuständig ist, wird dabei erst zu einem späteren Zeitpunkt verschlossen als ein Arbeitsport, der für nachrangige Aufgaben Hydraulikmittel zur Verfügung stellt, z. b. für eine Kühlung. Der Arbeitsport, der für die Versorgung eines Kupplungsbetätigers zuständig ist, ist als zuletzt zu verschließender Arbeitsport vorgesehen. Der Kolben des (einzigen diese Aufgabe übernehmenden) Ventils ist so gestaltet, dass eine Verbindung von einem Versorgungsanschluss zu einem ersten Arbeitsport über lange Verstellstrecken des Kolbens erhalten bleibt, während ein anderer Versorgungsanschluss zu einem anderen Arbeitsport im Vergleich hierzu über eine kürzere Verstellstrecke des Kolbens hergestellt ist.

In Getrieben mit mehreren Kupplungen und einer bedarfsabhängigen Druckversorgung kann so dem Betrieb der Kupplungen vor einer Kühlung der Kupplungen und/oder einer Schmierung von Getriebebereichen ein Vorrang eingeräumt werden. Das Ventil kann auch in der Art in einer Getriebesteuerung verbaut werden oder sein, dass einem Anpressdruckverbraucher der Vorrang gegeben wird, während eine Komponente des Kraftfahrzeugs, die mit einem niedrigeren Druck arbeitet, von dem Ventil aus nur dann versorgt wird, wenn eine ausreichende Versorgung, z. B. über einen Drucksensor in einer zentralen Versorgungsleitung, festgestellt worden ist. Das Ventil, das mit verschiedenen funktionellen Namen, wie Vorrangwegeventil, Cut-Off-Ventil, Sperrventil oder Kupplungssteuerventil, einen Teil seiner Funktionen definiert, hat sekundärseitig zwei oder mehr Arbeitsports, an denen Hydraulikmittel auf unterschiedlichen Druckniveaus zur Verfügung gestellt wird.

Nachfolgend werden vorteilhafte Ausgestaltungen und Weiterbildungen dargelegt, die für sich gesehen, sowohl einzeln als auch in Kombination, ebenfalls erfinderische Aspekte offenbaren können.

Die hydraulische Schaltung ist eine Getriebesteuerung, in der wenigstens ein Ventil vorhanden ist. Vorteilhafterweise können über das Ventil Anschlüsse von Leitungen an Arbeitsports des Ventils mit Hydraulikmittel auf unterschiedlichen Druckniveaus versorgt werden. Das Ventil kann ein pilotgesteuertes Kolbenschieberventil sein. Ein Kolbenschieberventil kann z. B. als ein 4/4-Cartridge-Ventil oder als ein 5/4-Cartridge-Ventil ausgestaltet sein. Im dem Fall, dass es sich um ein 5/4-Cartridge-Ventil handelt, sind zwei Anschlüsse für zwei unterschiedliche Hydraulikversorgungen vorgesehen, zwei Anschlüsse gelten als Sekundärseite und ein Anschluss ist für eine Tank- oder Reservoirrückleitung vorgesehen.

Die hydraulische Schaltung hat verschiedene Baugruppen. Eine der Baugruppen ist eine hydraulisch betätigbare Kupplungsbaugruppe. Als Kupplungsbetätiger können z. B. Linearkolben eingesetzt werden. Die Kupplungsbetätiger können z. B. zweifach vorhanden sein. Wenigstens einer von ihnen kann ein einseitig federvorgespannter Linearkolben sein. Der Linearkolben kann in seiner Lage verändert werden. Die Lageveränderung des Linearkolbens sorgt für eine (übertragene) Veränderung von Lagen bei dem oder den Kupplungsmittel(n) wie z. B. von Reibbelägen einer "normally-open-Kupplung". Hierdurch sind lineare Verstellungen entlang von Verstellwegen möglich.

Vorteilhafterweise sind in der hydraulischen Schaltung die Ruhestellungen der einzelnen Stellglieder und der einzelnen Ventile bestimmt. In einer Ruhestellung wird ein erster Hydraulikmittelstrom an die Baugruppe, die gesondert angesteuert gehört, geleitet. Zur gleichen Zeit kann in der Ruhestellung ein zweiter Hydraulikmittelstrom als Hydraulikmittel zur Kühlung und/oder Schmierung von der Vorrangschaltung zur Verfügung gestellt werden.

Die hydraulische Schaltung mag als einziges Ventil für die Vorrangsteuerung zwischen Kupplungskühlung und Kupplungsansteuerung das Vorrangwegeventil aufweisen. Das Vorrangwegeventil kann funktionell ein Sperrventil sein, das aktiv in einen Sperrzustand zu versetzen ist. In diesem Fall ist das Ventil in einem Durchschaltzustand, außer wenn es in den Sperrzustand gesetzt wird. Durch eine solche Maßnahme kann sichergestellt werden, dass selbst bei Ansteuerfehlern Hydraulikmittel den Kupplungen zur Verfügung gestellt wird. Aufwendige, die Effizienz verringernde Gegenmaßen für solche Fehlerfälle können eingespart werden.

Die hydraulische Schaltung kann als Steuerventil zur Ansteuerung der Kupplungsbaugruppe ein Ventil aufweisen, das wenigstens vier Zustände umfasst. Von den vier Zuständen können dann drei Zustände so ausgelegt sein, dass ein Hydraulikmittelfluss in wenigstens eine von zwei Verbraucherleitungen durchgelassen wird.

Die Getriebesteuerung hat ein Steuerventil, das mit dem Namen "einziges Ventil" für die Kupplungsgruppenansteuerung weiter oben bezeichnet worden ist, in der Form, dass es für einen Arbeitsdruck gestaltet ist, der um wenigstens mehrere bar über dem abweichenden Druckniveau liegt. Die Kupplungsansteuerung ist für einen (bestimmten) Druck in einem Druckband z. B. von 30 bar bis 60 bar gestaltet, während die Kühlung und/oder die Schmierung nur mit unter Druck stehendem Hydraulikmittel von z. B. maximal 3 bar durchgeführt wird. Für einen Fachmann ist aber klar, dass die gesamte hydraulische Getriebesteuerung mehr als nur ein einziges Ventil aufweist.

In einer vorteilhaften Weiterbildung kann die Getriebesteuerung mit dem einzigen Ventil in der Ruhestellung des Kolbens Durchlässe zu beiden Arbeitsports aufweisen.

Dies kann dahingehend weiterentwickelt werden, dass sich an die Ruhestellung eine Stellung als eine erste betätigte Stellung anschließt, die einen volumensmäßig anderen Hydraulikmittelfluss durchlässt. Die Stellung, die der Ruhestellung folgt, hat in diesem Fall einen zweiten Durchlasszustand zu beiden Arbeitsports.

Anschließend kann bei einem Kupplungsbetätigungsventil in der Form eines 5/4-Ventils oder eines 5/5-Ventils eine zweite betätigte Stellung vorhanden sein, die durch eine energetisch höhere, z. B. durch ein längeres aktives Tastverhältnis gegebene Ansteuerung angefahren werden kann. An dem Ventil, das als "einziges Ventil" für das Sperren der Kupplungsbaugruppe bezeichnet worden ist, ist ein Zustand vorhanden, der nur noch einen Durchlass zu einem der beiden Arbeitsports gewährt.

Die Getriebesteuerung kann in einer vorteilhaften Weiterbildung eine Sperrstellung habe, bei der eine hydraulische Entlastung des einen Arbeitsports gegen einen Tank erfolgt. Das Ventil schaltet den einen Arbeitsport auf Tank. In dieser Stellung kann der andere Arbeitsport hydraulisch abgekoppelt von einer Versorgungsseite sein.

In wenigstens einem Zustand kann wenigstens einer der wenigstens zwei Volumenströme gedrosselt sein. Wird dieser Zustand von dem Ventil eingenommen, ist der Hydraulikmittelfluss an dem Arbeitsport bzw. durch den Arbeitsport reduziert im Vergleich mit einem anderen Zustand. Dieser Zustand kann als Zustand zur weiteren Effizienzsteigerung, z. B. von einem Getriebesteuergerät, genutzt werden.

Weiterführende Betrachtungen und Aspekte sollen nachfolgend in Ergänzung dargelegt werden, die ebenfalls eigenständig erfinderische Aspekte offenbaren können.

In einem Doppelkupplungsgetriebe sind u. a. seine Kupplungen anzusteuern. Mindestens eine erste und eine zweite Kupplung sind ansteuerbar ausgestaltet. Dazu kann eine Hydraulikschaltung des Doppelkupplungsgetriebes genutzt werden. Das Doppelkupplungsgetriebe ist insbesondere für den Einsatz in Pkws (Personen-Kraft-Wagen), also als Pkw-Getriebe gestaltet, z. B. aufgrund der zu übertragenden Drehmomente, des Bauraums und der Abmessungen. Die Hydraulikschaltung ist mit Aktuatoren ausgestattet, die jeweils eine an den jeweiligen Aktuator angeschlossene Kupplung betätigen können (z. B. von Kupplungen des Typs "normally open" - im unbetätigten Zustand "offen" bzw. in einer kraftflussunterbrechenden Stellung). Es gibt einen Aktuator für die erste Kupplung. Es gibt einen Aktuator für die zweite Kupplung.

Besonders vorteilhaft ist es, wenn jede der Kupplungen über eine Druckregelung angesteuert werden kann. In einer solchen Ausgestaltung ist es möglich, dass der Betätigungsgrad der gesteuerten Kupplung einem Druck entspricht, der in dem Kupplungsbetätiger, dem Kupplungsaktuator vorherrscht. Wird die Kupplung über eine federartige Vorspannung in ihrem Normalzustand, z. B. im Zustand "normally open", gehalten, kann mittels der Druckregelung ein Schlupfgrad der Kupplung eingestellt werden. In diesem Fall wirkt der Druck entgegen der Feder der Vorspannung der Kupplung (Kupplungsvorspannungsfeder).

Als Kupplungsaktuatoren eignen sich insbesondere Aktuatoren mit Linearkolben, bei denen eine Kolbenstange durch einen Kolben bewegt wird. Der Kolben kann beidseitig oder - in einer alternativen Ausgestaltung - auch nur einseitig hydraulisch eingespannt sein. Besonders vorteilhaft ist es, wenn der Kolben auf einer Feder ruht bzw. an einem Federende anliegt. Reicht die Federspannung aus, so kann der Kolben des Aktuators in eine Gleichgewichtslage zwischen hydraulischem Druck auf der einen Seite und Federvorspannung auf der anderen Seite des beidseitig mit Kräften beaufschlagten bzw. beaufschlagbaren Kolbens gebracht werden. Die Federvorspannung befindet sich in einem durch ein Kräftegleichgewicht definierten Verhältnis zu dem Hydraulikdruck, der z. B. in dem Aktuator herrscht. Aus Gründen der Bauteilreduktion reicht es in vielen Anwendungsfällen, wenn eine (einzige) Feder in einem Bewegungsraum des Kolbens angeordnet ist. Von einer Seite wird der (jeweilige) Kupplungsaktuator eingespannt bzw. vorgespannt. In einer Ausgestaltung gibt es einen ersten und einen zweiten Kupplungsaktuator, wobei beide Kupplungsaktuatoren in ihrer Ruhestellung eine Vorzugsstellung aufgrund einer Federkraft einnehmen. Daneben können auch noch weitere Kupplungsaktuatoren vorhanden sein, wie z. B. ein dritter Kupplungsaktuator.

Für die Einstellung des ersten Kupplungsaktuators ist in dem Strang zu dem Kupplungsaktuator ein erstes, vorzugsweise proportionales, Druckregelventil vorhanden. Das Proportionaldruckregelventil (bzw. Proportional-Druck-Regelventil) ist strömungsmäßig vor dem ersten Kupplungsaktuator zwischen Druckquelle und dem Verbraucher "Kupplungsaktuator" angeordnet. Mithilfe von einem proportionalen Druckregelventil, das strömungsmäßig vor dem zweiten Kupplungsaktuator angeordnet ist, ist eine Steuerung der zweiten Kupplung durchführbar.

Gem. einer Betrachtungsweise gibt es einen ersten Hydraulikzweig. Es gibt einen zweiten Hydraulikzweig. Jeder Hydraulikzweig kann im steuerungstechnischen Sinne als autark bezeichnet werden. Jedes der wenigstens zwei Druckregelventile sitzt in einem eigenständigen Hydraulikzweig, dem so genannten Kupplungszweig. Zumindest zwei der Hydraulikzweige münden in ihren jeweiligen Aktuator aus. Dieser Aktuator ist der Kupplungsaktuator.

Zu den Hydraulikzweigen gehört wenigstens eine Bypass-Leitung. Idealerweise hat der erste Hydraulikzweig eine erste Bypass-Leitung und der zweite Hydraulikzweig eine zweite Bypass-Leitung. Die jeweilige Bypass-Leitung führt abschnittsweise parallel zu einer Hauptleitung des Hydraulikzweigs. Die erste Bypass-Leitung führt um das erste Druckregelventil herum. Die zweite Bypass-Leitung führt um das zweite Druckregelventil herum. Die Bypass-Leitungen sind Parallelleitungen zu den Druckregelventilen. In einer günstigen Ausgestaltung hat jedes Druckregelventil seine eigene Bypass-Leitung.

Zu dem Hydraulikzweigen zu den Kupplungsaktuatoren gehört wenigstens ein Sperrventil. Das Sperrventil, das auch als "Cut-Off-Ventil" bezeichnet werden kann, sollte mindestens zwei (eindeutige) Zustände anbieten (Durchflussstellung, die in mehrere Varianten unterteilt sein kann, und Ablassstellung). In einer möglichen Ausgestaltung kann aber auch das Ventil, das z. B. als "Cut-Off-Ventil" bezeichnet werden kann, seine Funktion auf ein anderes Ventil übertragen. Dann ist es möglich, das andere Ventil und das Sperrventil zu einem Ventil zu vereinen, z. B. als einziges Ventil, in dem eine Subanordnung an Schaltstellungen die Funktion des "Cut-Off-Ventils" umsetzt. Das Sperrventil ist ein wenigstens zwei Zustände aufweisendes Sperrventil, vorzugsweise wenigstens vier Zustände aufweisendes Ventil. Das Sperrventil sitzt strömungsmäßig vor den Druckregelventilen. Das wenigstens eine Sperrventil ist, von der Hydraulikquelle aus gesehen, vor dem nachfolgenden Druckregelventil. Wenigstens ein Sperrventil ist in dem Bereich der Hydraulikschaltung vorhanden, der für die Kupplungsansteuerung zuständig ist.

In einer Ausgestaltung ist ein Sperrventil vor den nachfolgenden Druckregelventilen vorgesetzt. In diesem Fall gibt es ein gemeinsames Sperrventil für z. B. zwei Druckregelventile. In einer alternativen Ausgestaltung ist jedem Druckregelventil ein eigenes Sperrventil vorgeschaltet. In diesem Fall bildet sich eine Baugruppe aus Sperrventil und Druckregelventil (ebenfalls betrachtet von der Druckquelle aus kommend).

Zumindest eines der beiden Druckregelventile ist als ein Dreizustandsventil ausgestaltet. Das Druckregelventil, das ein Proportional-Druckregelventil ist, hat wenigstens drei Zustände, die durch eine Ansteuerung eingenommen werden können. Insbesondere bestimmen sich die drei Zustände aus einem Kräftegleichgewicht zwischen einer extern aufgebrachten Kolbenkraft und einem hydraulischen Druck auf den Kolben. Von den drei Zuständen, die das Druckregelventil einnehmen kann, ist ein Zustand ein hydraulischer Sperrzustand. Befindet sich der Kolben in einer Stellung, durch die das Ventil hydraulisch gesperrt wird, kann kein Hydraulikmittel von der Versorgungsseite auf die Verbraucherseite und umgekehrt gelangen.

In wenigstens einer der Bypass-Leitungen ist ein Flussregelventil integriert, das auch als Bypass-Ventil bezeichnet werden kann. Das Flussregelventil kann den Fluss durch die Bypass-Leitung steuern. Z. B. ist ein Sperr- oder Rückschlagsventil ein solches Flussregelventil. Das Flussregelventil erlaubt den Fluss durch das Ventil in einem Zustand. In einem anderen, z. B. zweiten Zustand, befindet sich das Flussregelventil in einer Sperrstellung. Ob Freistellung oder Sperrstellung kann sich z. B. druckabhängig einstellen. Ein mögliches Rückschlagsventil ist ein Ventil, das im Falle einer Druckumkehr von der Verbraucherseite auf die Versorgungsseite zu einer Freigabe des Ventils führt. Bei einem Überdruck bzw. einem ausreichenden Druckunterschied, auch Druckgefälle genannt, in einer Zuleitung ist die Bypass-Leitung in Durchflussrichtung freischaltbar. Die Bypass-Leitung ist druckdifferenzgesteuert. Liegt eine ausreichende Druckdifferenz an, so kann das Ventil, das in der Bypass-Leitung integriert ist, durchschalten. Die Zuleitung erstreckt sich vorteilhafterweise von dem Druckregelventil zu dem ihm zugeordneten Kupplungsaktuator. Bei einem Vorhandensein ausgewählter Druckverhältnisse, z. B. einem höheren Druck vor dem Kupplungsaktuator als vor der Versorgungsseite des Druckregelventils, ist das Flussregelventil in Durchflussrichtung freischaltbar.

Vorteilhaft für Antriebstränge mit einem Doppelkupplungsgetriebe ist es, wenn die hydraulische Ansteuerschaltung für das Doppelkupplungsgetriebe, wobei die Ansteuerschaltung Teil des Doppelkupplungsgetriebe sein kann, ein inkorporiertes Verfahren anbietet, das im Fall einer ungewöhnlichen Situation oder sonstigen Notsituation abgearbeitet werden kann bzw. ablaufen kann.

Bietet die hydraulische Schaltung des Doppelkupplungsgetriebes Funktionen an, die genutzt werden können, um ein Notreaktionsverfahren abzulaufen, so ist eine weitere Ebene, neben der aus Sensoren und programmierter Steuerungslogik existierenden, darüber liegenden Ebene, geschaffen, durch die Sicherheiten im Antriebstrang eines Kraftfahrzeugs erreicht werden können. Solche Notreaktionsverfahren können in einem zuvor beschriebenen Doppelkupplungsgetriebe implementiert sein.

Der Kraftfluss über das Doppelkupplungsgetriebe sollte unterbrechbar sein. In ausgewählten Situationen ist es günstig, wenn das Getriebe keinerlei Kraftfluss mehr von der Antriebs- zur Abtriebsseite zulässt. Im Rahmen des Notreaktionsverfahrens wird eine Kraftflussunterbrechung hergestellt. Die Kraftflussunterbrechung erfolgt durch eine Entlastung eines Arbeitsraums eines Linearzylinders, der ein Kupplungsaktuator ist. Das Hydraulikmittel kann aus dem Arbeitsraum des Linearzylinders austreten und vorteilhafterweise in den Sumpf abfließen.

Ein Sperrventil kann aufgrund einer aktiven Ansteuerung in einen (ausgewählten) Zustand versetzt werden. Dieser Zustand ist eine Ablaufstellung. In der Ablaufstellung kann Hydraulikmittel aus dem Hydraulikzweig abgelassen werden. Das Ventil wird in die Ablaufstellung gefahren bzw. der Kolben des Ventils wird verfahren.

Durch die Einnahme der Ablaufstellung gelangt ein in einer Bypass-Leitung vorhandenes Flussregelventil ebenfalls in eine Durchflussstellung. Das Flussregelventil befindet sich in einer parallel angeordneten Bypass-Leitung. Die Bypass-Leitung führt um ein Druckregelventil herum. Unabhängig von der Stellung des Druckregelventils ist es möglich, dass das Flussregelventil in der Bypass-Leitung in Durchflussstellung gerät.

In einer besonders vorteilhaften Ausgestaltung gibt es vorzugsweise zwei Flussregelventile. Jedes der beiden Flussregelventile ist parallel zu einem ihm zugeordneten Proportional-Druckregelventil in umgekehrter Richtung (in Bezug auf die Hauptflussrichtung zu dem Verbraucher) eingebaut vorhanden. Jedes Flussregelventil hat eine eigene Bypass-Leitung. Die Bypass-Leitung führt um jeweils ein einziges Druckregelventil herum. Das Flussregelventil kann in eine Durchflussstellung gezogen werden.

Die Durchmesser der Leitungen eines Hydraulikzweigs sind auf die Öffnungen der vorhandenen Ventile abgestimmt. Es kann von einer Viskosität eines Getriebeöls ausgegangen werden, wenn ein Temperaturbereich, in dem sich das Hydraulikmittel "Getriebeöl" befindet, bekannt ist. Wird eine kinematische Viskosität bei 100 °C zwischen 4,1 $mm^2/s$ und 32 $mm^2/s$ angenommen, wobei vorzugsweise ein Getriebeöl verwendet wird, das eine kinematische Viskosität zwischen 5 $mm^2/s$ und 20 $mm^2/s$ bei 100 °C hat, so lässt sich die Ablaufzeit anhand der Querschnitte (z. B. im Bereich von 10 $mm^2$ und 20 $mm^2$) der Leitungen und der Ventilbohrungen (i. d. R. kleiner als die Querschnitte der Leitungen) bestimmen. Das hydraulische Verhalten der Leitungen und der Ventilbohrungen, insbesondere im Hinblick auf das Fließverhalten, kann mit Hilfe der Blendengleichung

$$Q_{Blende} = \alpha_K * A_0 * \sqrt{\frac{2 * \Delta p}{\rho}},$$

wobei $\alpha_K$ eine Durchflusszahl (wie ein Proportionalitätsfaktor, z. B. 0,8), $A_0$ eine Blendenfläche in $mm^2$, $\Delta p$ eine Druckdifferenz in bar und $\rho$ eine übliche Dichte ist, und der Drosselgleichung

$$Q_{Drossel} = \frac{\pi * r^4}{8 * \eta * l} * (p_1 - p_2),$$

wobei r ein Radius der Leitung in mm, l eine Länge der Leitung in mm und $\eta$ ein Wert für die Viskosität, gebildet aus kinematischer Viskosität und Ölviskosität, ist und ein Druckgefälle zu berechnen ist,

- jeweils in einer ersten Näherung - festgelegt bzw. abgeschätzt werden.

Innerhalb von 200 ms, d. h., in einer Zeit, die kürzer als 200 ms ist, kann das Hydraulikmittel über die Bypass-Leitung aus dem Hydraulikzweig abströmseitig hinter dem Druckregelventil ausgebracht werden. Hierdurch geht die angesteuerte Kupplung in die geöffnete Stellung. Es findet eine Kraftflussunterbrechung statt, die insbesondere innerhalb eines Zeitraums von nicht mehr als 200 ms abgeschlossen ist. Durch eine Auslegung der Bypass-Leitung, sodass ihr Durchmesser faktormäßig, idealerweise selbst an der engsten Stelle, in einem Wertebereich von 1,5 bis 10 (für den Faktor) im Vergleich zu den Drosselstellen über das Proportionaldruckregelventil liegt, können Abflusszeiten eingestellt werden. In einer Auslegung wird die Bypass-Leitung derart dimensioniert, dass die Leitung einen Durchmesser mit einem Faktor von mehr als 5 hat (im Vergleich mit der Leitungsstrecke über das Proportional-Druckregel-Ventil). In einer für ein beschleunigtes Ausströmen noch günstigeren Ausgestaltung liegt der Faktor bei 10. Werden die Radien oder die Durchmesser zwischen der Leitung über das Proportional-Druckregelventil und der Leitung durch die Bypass-Leitung miteinander verglichen, so ist der Radius (alternativ der Durchmesser) für die Bypass-Leitung zehnmal so groß im Vergleich mit der Leitung über das Proportional-Druckregelventil. Sollten nur begrenzte Platzverhältnisse bei der Auslegung einer Steuerplatte vorhanden sein, so ist es z. B. möglich, einen Leitungsquerschnitt für die Bypass-Leitung in einer Größenordnung um 20 $mm^2$ (+/-5 $mm^2$) zu gestalten. Die Bypass-Leitung hat z. B. einen Querschnitt von 20 $mm^2$. Die Ports eines Steuerventils wie einem Druckregelventil haben an ihren schmalsten Stellen Durchmesser, die weniger als 10 $mm^2$ betragen. Somit ergibt sich ein Faktor von ungefähr 2.

Dank des Ventils in der Bypass-Leitung, das ein Rückschlagsventilverhalten hat, ist eine Entleerung der hydraulischen Leitung(en), die zu dem Kupplungsaktuator führen, besonders zügig möglich. Nach einer automatisiert erfolgten Entleerung können in einer Ausgestaltung die Leitungen hydraulikmittelfrei sein. In einer anderen Ausgestaltung ist das Ventil mit Rückschlagverhalten mit einem Vordruck eingestellt, sodass ein Mindestdruck in der Leitung zu dem Kupplungsaktuator verbleibt.

Die Hydraulikschaltung arbeitet besonders zuverlässig, insbesondere im Notfall, wenn jede Bypass-Leitung ein eigenes Flussregelventil aufweist. Das Flussregelventil kann z. B. als mechanisch arbeitendes Rückschlagsventil realisiert sein. Ein mechanisch arbeitendes Rückschlagsventil reagiert auf Druckunterschiede, ohne dass z. B. eine aktive Komponente wie ein Magnet notwendig ist.

Eines der Druckregelventile, in einer besonders günstigen Ausgestaltung beide Druckregelventile, ist ein (sind) federvorgespannte(s) 3/3-Elektromagnetventil(e). Hierbei kann das Druckregelventil mit einer hydraulischen Rückkopplung ausgestattet sein. Die Rückkopplung erfolgt auf den Kolben. Die Rückkopplungsleitung kann auf die Verbraucherseite des jeweiligen Ventils führen. Je nach Ausgestaltung des Ventils wird die Verbraucherseite auch gerne von Hydraulikern als A-Seite, gelegentlich auch als B-Seite bezeichnet. Die Verbraucherseite ist die Abstromseite bei einem regulären Betrieb eines Schaltungsteils des Ventils. Die Verwendung eines 3/3-Elektromagnetventils ist ein Beitrag gegen ein unkontrolliertes Öffnen des Rückschlagsventils aufgrund von dynamischen Wechselwirkungen zwischen proportionalem Druckregelventil und dem Rückschlagsventil, insbesondere in den Fällen, in denen es als Kugelsitzrückschlagsventil ausgeführt ist.

Als eines der Sperrventile in der Hydraulikschaltung eignet sich z. B. ein 3/2-federvorgespanntes Elektromagnetventil. An das Ventil führen 3 Leitungen. Das Ventil kann zwischen zwei Zuständen hin- und hergeschaltet werden. Eine Feder sorgt für die Einnahme einer Vorzugsstellung des Kolbens, insbesondere in dem Falle, in dem der Elektromagnet keine Kraft auf den Kolben ausübt. Mithilfe der Feder kann sichergestellt werden, dass das Ventil in Durchlassstellung schaltet. Die Anschlüsse des Sperrventils können in einer Ausgestaltung ein Tankanschluss, ein Anschluss an eine Systemdruckleitung und ein Arbeitsanschluss sein. Das Elektromagnet-Ventil, das Sperrventil ist an einer zentralen Systemdruckleitung auf einer Versorgungsseite angeschlossen.

Die Hydraulikschaltung des Doppelkupplungsgetriebes arrangiert sich um eine zentrale Systemdruckleitung herum. Die Hydraulikschaltung kann in einem Gehäuse vorliegen, der sogenannten Steuerplatte (siehe einleitende Erläuterungen). Die Steuerplatte hat ein plattenartiges Aussehen, auf deren Oberfläche Ventilmagneten angeordnet sind. Innerhalb der Steuerplatte gibt es eine Systemdruckleitung, die die Steuerplatte durchsetzt. Die Systemdruckleitung funktioniert als eine zentrale, leitungsgeführte Druckquelle für Aktuatoren des Doppelkupplungsgetriebes. Die Leitung mit dem höchsten Druckniveau ist die Systemdruckleitung.

Der Druck des Hydraulikmediums in der Hydraulikschaltung wird von zwei Pumpen erzeugt. Die Pumpen liefern das unter Druck stehende Hydraulikmedium in die Systemdruckleitung. Die Systemdruckleitung ist eine von wenigstens zwei Pumpen mit Hydraulikmedium versorgbare Ausgangsdruckleitung. Von dieser Druckleitung gehen die weiteren Leitungen ab. Von dieser Druckleitung geht die Versorgung der übrigen Komponenten der Hydraulikschaltung, der Verbraucher der Hydraulikschaltung aus.

Die Pumpen fördern das Hydraulikmedium in die Systemdruckleitung. Die Pumpen können jedoch, vorzugsweise jede für sich, ausgeschaltet werden bzw. still gesetzt werden. Als Maßnahme zum Abkoppeln der Pumpen von der Systemdruckleitung sind (weitere) Sperrventile vorgesehen. Geeignete Sperrventile sind hydraulische Ventile, die insbesondere durch Federn federvorgespannt sind. Mittels Sperrventile können z. B. die Pumpen von der Systemdruckleitung hydraulisch getrennt werden.

Der Kolben des Druckregelventils und der Kolben des Kupplungssteuerventils ("Cut-Off-Ventils") ist zunächst einmal frei gestaltbar. Besonders günstig ist es jedoch, wenn der Kolben so gestaltet ist, dass er in seinen Extrempositionen hydraulische Wege freigibt. Ein solcher Kolben kann in eines der Druckregelventile eingebaut werden. Wenigstens eines der Druckregelventile weist einen Kolben auf, der in seinen Extrempositionen hydraulische Durchflussstellungen aufweist. In einer Stellung, die sich im mittleren Bereich des Kolbenweges befindet, in einer Mittenstellung des Kolbens, weist dieser eine Trennstellung auf. Ein solcher Kolben kann in einem proportionalen Druckregelventil so betrieben werden, dass er in eine Zufluss- oder Abflussstellung gelangt, wenn die Ansteuerung des Elektromagneten verändert wird. In einer Mittenstellung verbleibt der Kolben, wenn sich ein Kräftegleichgewicht eingestellt hat. Hierbei wirkt günstiger Weise ein Stößel auf den Kolben und sorgt für die Bewegung des Kolbens. Somit können die Stellungen, erste Durchflußstellung, Sperrstellung und zweite Durchflussstellung auch auf die Stößelpositionen übertragen werden. Kolben und Stößel weisen zwei Durchflußstellungen in den Extrempositionen auf, und in einer mittleren Position eine Sperrstellung.

Mithilfe einer elektrischen Taktung an dem Elektromagneten eines der Druckregelventile ist der Druck an der Verbraucherseite des Druckregelventils einstellbar. Jedes der Druckregelventile hat seinen eigenen Elektromagneten. In oder an jedem Ventil gibt es eine Feder. Die Feder erzeugt eine Federvorspannung, die auf den Kolben wirkt. Mit einem mittleren Tastverhältnis kann eine Mittenstellung aktiv eingenommen werden. Die Position ergibt sich aus einem Kräfteverhältnis zwischen der Kraft aus dem Magneten und der Kraft aus der Federvorspannung. Die Position, insbesondere die Mittenposition wird eingenommen, wenn sich das Kräftegleichgewicht einstellt.

Das Schaltverhalten in einem Kupplungszweig kann noch weitergehend verbessert werden, wenn in dem Kupplungszweig ein Dämpfer vorgesehen ist. In der Hydraulikschaltung gibt es wenigstens einen Dämpfer. Idealerweise ist der Dämpfer ein Dämpfer, dessen Volumensplatte mit einer Feder unterstützt ist. Der Dämpfer bietet einen Volumensraum, der je nach Druck auf dem Hydraulikmittel bzw. des Hydraulikmittels erweiterbar ist. Bei Druckabsenkung befördert die Feder Hydraulikmittel aus dem Dämpfer in die Leitung, an der der Dämpfer angeschlossen ist. Der Dämpfer kann in einem Abschnitt angeordnet werden, der zu mindestens einem der Kupplungsaktuatoren hinführt. Der Dämpfer drückt, wenn er ein federvorgespannter Dämpfer ist, Hydraulikmedium in den Kupplungsstrang aus. Schwingungen auf einer Leitung zu einem Arbeitsraum des Kupplungsaktuators sind mittels Dämpfer verringerbar, je nach Ausgestaltung auch unterdrückbar.

In einer Ausgestaltung führen aus der Hydraulikschaltung mehrere Leitungen in den Sumpf, der als Rücklaufraum für das Hydraulikmedium zur Verfügung steht. In einer Ausgestaltung ist sowohl wenigstens eines der Druckregelventile als auch wenigstens eines der Sperrventile mit einer Hydraulikmittelrückflussleitung ausgestattet. Jedes der Ventile hat eine eigenständige Sumpfrückflussleitung. Sind in einer Ausgestaltung zwei Druckregelventile vorhanden und wenigstens ein Sperrventil, so gibt es drei Leitungen, die Sumpfrückflussleitungen sind. Die Hydraulikschaltung weist mehrere Leitungen auf, die aus dem Sumpf Hydraulikmittel anziehen können, und auch mehrere Leitungen, die Hydraulikmittel in den Sumpf ablassen können.

Zu der Hydraulikschaltung können Drucksensoren gehören. Eine geeignete Stelle für den Einbau eines Drucksensors kann eine erste Zuleitung zu dem ersten Kupplungsaktuator sein. In der Zuleitung zu dem ersten Kupplungsaktuator sitzt ein erster Drucksensor. Dieser erste Drucksensor ist dazu bestimmt, den Druck in diesem Kupplungsaktuator dadurch zu messen, dass der Druck in der Zuleitung gemessen wird, der nahezu oder tatsächlich identisch zu dem Druck im Kupplungsaktuator, zumindest im eingeschwungenen Zustand, ist.

In einer zweiten Zuleitung zu dem zweiten Kupplungsaktuator kann ein zweiter Drucksensor vorhanden sein. In dem Fall hat jeder Kupplungsaktuator einen eigenen Drucksensor. Die Drucksensoren sind aber nicht in den Kupplungsaktuatoren eingebaut, sondern sie befinden sich in den Zuleitungen zu den Kupplungsaktuatoren, also in den Hydraulikzweigen "Kupplungssträngen". Jeder der Drucksensoren in den Hydraulikzweigen zu den Kupplungsaktuatoren erlaubt es, einen Druck in Relation zu seinem Kupplungsaktuator zu messen.

Vorzugsweise sind die Hydraulikzweige zu den Kupplungsaktuatoren zumindest stromabwärts ab dem Sperrventil gleich, eventuell sogar identisch aufgebaut. In diesem Fall bedeutet es, dass gleichartige Bauteile in jedem Hydraulikzweig, der zu einem Kupplungsaktuator führt, vorhanden sind (Gleichteilkonzept). Gleiche Teile in Bezug auf solche Komponenten wie Druckregelventil, Dämpfer, Rückschlagsventil und Hydraulikleitungen sind bei einem Doppelkupplungsgetriebe wenigstens zwei Mal vorhanden.

Zudem kann in der Systemdruckleitung ein dritter Drucksensor vorhanden sein. Mit diesem Drucksensor ist der Druck in der Systemdruckleitung messbar, ermittelbar oder bestimmbar.

Sind mehrere Drucksensoren in der Hydraulikschaltung verbaut, so können Druckdifferenzen bestimmt werden. Diese Druckdifferenzen können als Regelgrößen von einer die Elektromagneten der Ventile ansteuernden Steuereinheit verarbeitet werden. Außerdem kann jeder Drucksensor alleine stehend schon als Sicherheitssensor ausgewertet werden. Ist der angezeigte Druck mit dem Solldruck nicht identisch und nähert sich der gemessene Druck, also der Druck, der von dem Drucksensor gemessen wird, auch nicht an den Solldruck innerhalb eines akzeptablen Zeitfensters, z. B. innerhalb von 1 Sekunde, in einem alternativen Zeitfenster innerhalb von 0,5 Sekunden, an, so ist von einem Fehler auszugehen. Zudem kann der Druck in der Zuleitung zu einem Kupplungsaktuator oder auch die Druckdifferenz zwischen einem Druck in der zentralen Systemdruckleitung, der Druckversorgungsleitung und dem Druck in dem Kupplungsaktuator dazu genutzt werden, das Steuerverhalten des Proportional-Druckregelventils entweder zu überwachen oder sogar zu steuern.

Durch die Modularisierung der Getriebehydraulik in ihre einzelnen funktionalen Gruppen lässt sich eine Aufrechterhaltung der Funktionalität in weiten Teilen des Getriebes realisieren. Im Fehlverhaltensfall wird nicht ein gesamtes Teilgetriebe, wie dies in vielen Ständen der Technik vorgesehen ist, sondern nur die das Fehlverhalten auslösende Baugruppe abgekoppelt. Trotzdem ist es möglich, auch das gesamte Getriebe innerhalb kürzester Zeiten lastlos zu schalten.

Die zuvor erläuterten Hydraulikkomponenten und Schaltungsprinzipien spielen ihre Vorteile insbesondere bei heckgetriebenen Kraftfahrzeugen aus. Ein entsprechender Kupplungsstrang kann unabhängig von der Kraftflusssituation in dem Fahrzeug innerhalb von nur 200 ms lastlos geschaltet werden. Der Kraftfluss über ein Räderumlaufgetriebe kann unterbrochen werden. Das Fahrzeug ist innerhalb von weniger als 200 ms lastlos schaltbar. Selbst elektrische Fehler, wie z. B. Fehlverhalten eines Steuergeräts, beispielsweise eine Fehlfunktion in einem Gangsteller, können innerhalb kürzester Zeit durch eine Kraftflussunterbrechung wirkungslos geschaltet werden. Ein Ausbrechen eines heckgetriebenen Kraftfahrzeugs kann vermieden werden. Blockierende Hinterachsen eines Kraftfahrzeugs lassen sich wieder lösen.

Aus den sich aus der Beschreibung ergebenden Vorteilen kann ein Fachmann ableiten, dass die Vorteile, wie Schnelligkeit, Zuverlässigkeit, Kompaktheit und Integration in einem Ventil anstelle von ganzen Baugruppen, sämtlich zu einer Effizienzsteigerung in der Getriebesteuerung beitragen können.

Die zuvor dargestellten Kombinationen und Ausführungsbeispiele lassen sich auch in zahlreichen weiteren Verbindungen und Kombinationen betrachten.

So ist es auch möglich, mehr als zwei Arbeitsports und ggf. auch mehr als zwei Versorgungsanschlüsse an dem Vorrangventil anzuordnen (z. B. durch Gestaltung des Vorrangwegeventils als 7/4-Ventil), um mit drei verschiedenen Druckniveaus wenigstens drei verschiedene Bereiche der hydraulischen Schaltung zu versorgen.

Die Kombination, "Kupplungssteuerung" mit einer weiteren Steuerung in einem einzigen Ventil zu integrieren, hat den Vorteil, dass mit sehr schnellen Reaktionszeiten eine energetisch vorteilhafte Steuerung auf mehreren Druckniveaus in der Hydraulikschaltung zur Getriebesteuerung herstellbar ist.

## Figurenkurzbeschreibung

Die vorliegende Erfindung kann noch besser verstanden werden, wenn Bezug auf die beiliegenden Figuren genommen wird, die beispielhaft besonders vorteilhafte Ausgestaltungsmöglichkeiten darlegen, ohne die vorliegende Erfindung auf diese einzuschränken, wobei

Figur 1 einen Antriebsstrang, insbesondere einbaubar in einem Kraftfahrzeug wie einem heckgetriebenen Personenkraftwagen, mit einem Doppelkupplungsgetriebe zeigt,
Figur 2 eine erste Ausgestaltung einer erfindungsgemäßen Lösung anhand eines Prinzip-Schaltplans einer hydraulischen Getriebesteuerung zeigt,
Figur 3 eine zweite Ausgestaltung einer erfindungsgemäßen Lösung anhand eines Prinzip-Schaltplans einer hydraulischen Getriebesteuerung zeigt,
Figur 4 einen Ausschnitt der linken unteren Ecke aus der Figur 3 zeigt,
Figur 5 eine dritte Ausgestaltung einer erfindungsgemäßen Lösung anhand eines mit Figur 4 vergleichbaren Ausschnitts aus einem Prinzip-Schaltplan einer hydraulischen Getriebesteuerung zeigt,
Figur 6 eine vierte Ausgestaltung einer erfindungsgemäßen Lösung anhand eines mit Figur 4 und Figur 5 vergleichbaren Ausschnitts aus einem Prinzip-Schaltplan einer hydraulischen Getriebesteuerung zeigt und
Figur 7 eine mögliche Durchflusskennlinie ein Kupplungssteuerungsventil gem. der Erfindung zeigt.

## Figurenbeschreibung

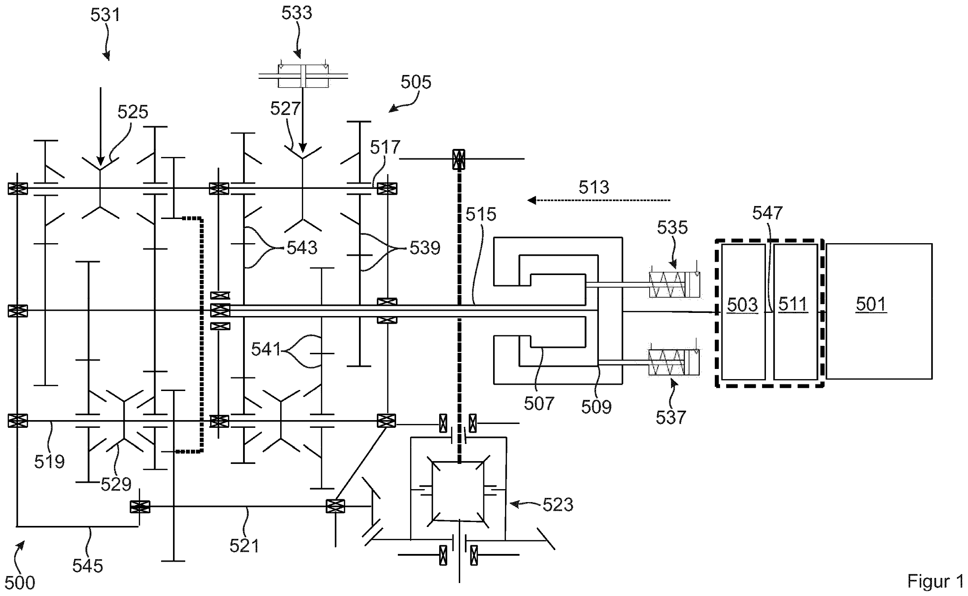

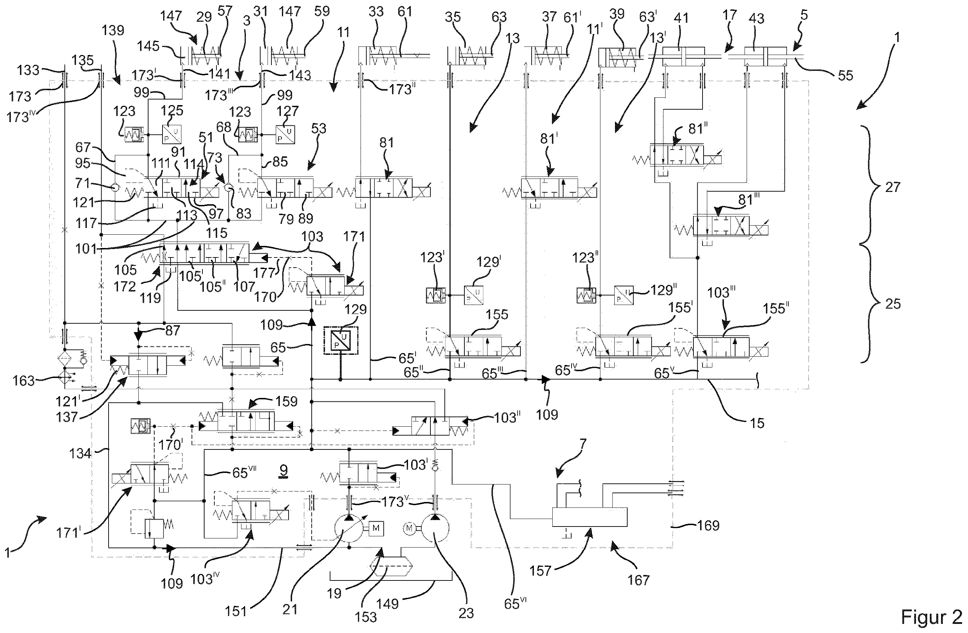

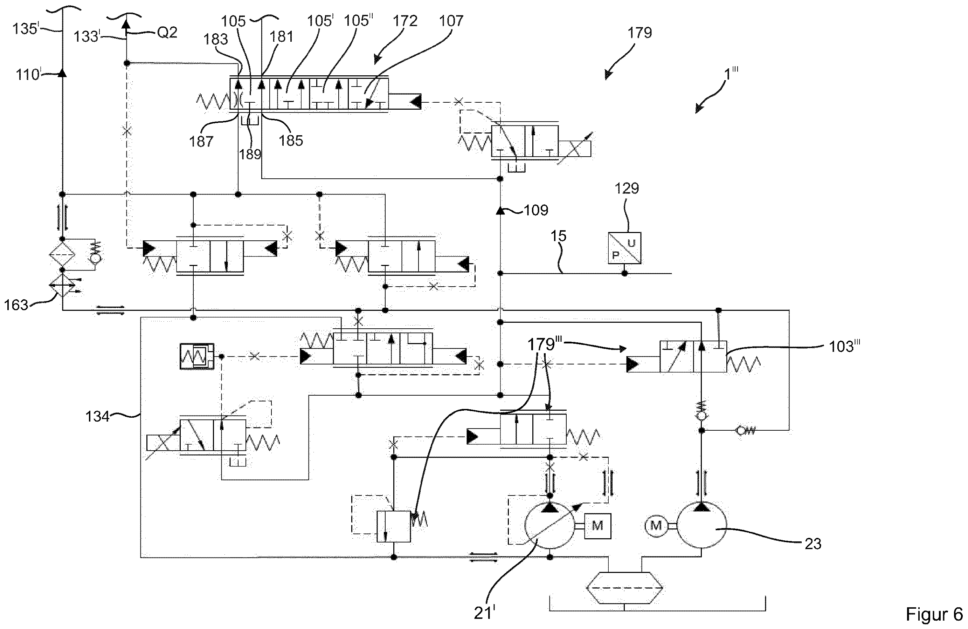

Figur 1 zeigt einen Antriebsstrang 500, für den eine Hydraulikschaltung 1, $1^I$, $1^{II}$, $1^{III}$ mit ihren Ansteuerungen 3, 5, $5^I$, 7, 11, $11^I$, 13, $13^I$ (nach den Figuren 2 bis 6) Betätigungs- und Eingriffsaufgaben übernehmen kann.

Der in Figur 1 gezeigte Antriebstrang 500 umfasst eine Verbrennungskraftmaschine 501, eine Elektromaschine 503, mehrere Kupplungen 507, 509, 511, von denen zumindest zwei Kupplungen 507, 509 Teil des Doppelkupplungsgetriebes 505 sind.

Zu dem Doppelkupplungsgetriebe 505 gehören die erste Kupplung 507, die zweite Kupplung 509, eine Eingangswelle 515, Vorgelegewellen 517, 519 und eine Ausgangswelle 521. Weitere Komponenten wie das Getriebegehäuse 545 und Zahnradpaare 539, 541, 543 gehören ebenfalls zu dem Doppelkupplungsgetriebe 505. Teil des Doppelkupplungsgetriebes 505 sind die Schaltmuffen 525, 527, 529.

Der aktuatorische Übergang zwischen den Hydraulikschaltungen 1, $1^I$, 1", $1^{III}$ (nach den Figuren 2 bis 5) und den zu stellenden Elementen des Doppelkupplungsgetriebes 505, wie den Schaltmuffen 525, 527, 529 oder wie den Kupplungen 507, 509, werden durch Gangstellzylinder 531, 533 und Kupplungszylindern 535, 537 gebildet.

Aus der Verbrennungskraftmaschine 501 führt die Kurbelwelle 547 heraus. Die Kurbelwelle 547 ist eine mehrteilige, zum Teil außerhalb der Verbrennungskraftmaschine 501 verlaufende Kurbelwelle, auf der weitere Komponenten des Antriebsstrangs 500 angeordnet sind. Die Elektromaschine 503 kann antreibend auf die Kurbelwelle 547 wirken. Genauso kann die Elektromaschine 503 in einem generatorischen Betrieb betrieben werden, wenn die Verbrennungskraftmaschine 501 über die Kurbelwelle 547 die Elektromaschine 503 antreibt. Mit Hilfe der Kupplungen 507, 509, 511 kann der Drehmomentenfluss aus den Antriebsmaschinen wie der Verbrennungskraftmaschine 501 und der Elektromaschine 503 in das Doppelkupplungsgetriebe 505 gesteuert werden. Mit Hilfe der Kupplungen 507, 509, 511 sind Kraftflussunterbrechungen 513 realisierbar. Das in das Doppelkupplungsgetriebe 505 eingeleitete Drehmoment entsprechend der Einstellung der Kupplungen 507, 509, 511 und der dadurch einhergehenden Kraftflussunterbrechung 513 gelangt über die Übersetzung der Zahnradpaare 539, 541, 543 auf das Differential 523, um so auf die (nicht dargestellten) Straßenräder geleitet zu werden.

Mittels hydraulischer Schaltungen, wie z. B. in den Schaltplänen der Figuren 2 bis 6 gezeigt, können die Gangstellzylinder 531, 533 und die Kupplungszylinder 535, 537 betätigt werden. Die Stellglieder in den Schaltungen 1, $1^I$, $1^{II}$, $1^{III}$ von denen zumindest Teile in den Figuren 2 bis 6 dargestellt sind, sind mit den Bezugszeichen 29, 31, 33, 35, 37, 39, 38, 41, 43, 45 bezeichnet. Aus Figur 1 entnimmt der Fachmann, worauf die Stellglieder, die durch Schaltkreise gem. der Figuren 2 bis 6 betätigbar und aktivierbar sind, einwirken sollen. Ein Fachmann kann dann eine Zuordnung des richtigen Stellglieds 29, 31, 33, 35, 37, 39, 38, 41, 43, 45 als Gangstellzylinder 531, 533 und als Kupplungszylinder 535, 537 in Abhängigkeit des zu erwartenden Betriebs- bzw. Ansteuerverhalten durchführen. Durch die Stellglieder 29, 31, 33, 35, 37, 39, 38, 41, 43, 45 gelangen in wenigstens einem Schaltzustand die Kupplungen 507, 509, 511 in eine Kraftflussverbindung. Mit Hilfe der Schaltmuffen 525, 527, 529 können die Gangstellzylinder 531, 533 Kraftflussverbindungen durch das Doppelkupplungsgetriebe 505 auf eine der Vorgelegewellen 517, 519 herstellen.

In den nachfolgenden Figuren werden Schaltungsvarianten, zum Teil als Ausschnitte von ausgewählten Bereichen, gezeigt, wie Antriebstränge, die dem Antriebsstrang 500 nach Figur 1 entsprechen oder ähneln können, in ihren Schaltstellungen und Kraftflussstrecken variiert werden können.

Figur 2 zeigt eine Hydraulikschaltung 1. Die Hydraulikschaltung 1 setzt sich aus einer Anzahl von Untergruppen zusammen, genauer aus mindestens sechs Untergruppen. Die Untergruppen sind hydraulisch betriebene Baugruppen, durch die Teile eines Getriebes 505 (siehe Figur 1) und/oder Teile eines Kraftfahrzeugs gesteuert werden können, wie z. B. Getriebekomponenten, wie z. B. Karosserie- oder wie z. B. Fahrwerksteile.

Wie in Figur 2 zu sehen ist, hat die Hydraulikschaltung 1 einen Teil, der eine Ansteuerung 3 für Kupplungen ist, die z. B. als Doppelkupplungen, wie in Figur 1 gezeigt, ausgebildet sind. Über die Ansteuerung 3 für Kupplungen können wechselweise oder auch gleichzeitig zwei Kupplungen 507, 509 (siehe Figur 1) in Eingriff und außer Eingriff gebracht werden.

Ein weiterer Teil der Hydraulikschaltung 1 ist eine Ansteuerung 5 zur Wahl von Muffen. Die (in Figur 2 nicht gezeigten) Muffen sind Gangeinlegeelemente eines Gangwechselgetriebes (vgl. Figur 1). Zur Versorgung zumindest einer weiteren Untergruppe, insbesondere über den Hydraulikzweig $65^{VI}$, hat die hydraulische Schaltung 1 ein Steuerventil 157, das seinen Steuerdruck von einer Zentraldruckleitung 15 (ähnlich zu den Steuerelementen der übrigen Hydraulikzweige 65, $65^I$, 65", $65^{III}$, $65^{IV}$, $65^V$) erhält. Eine weitere Untergruppe kann z. B. ein hydraulischer Betätigungsmechanismus einer Kfz-Komponente, wie für einen Kofferraumdeckel oder für eine Fahrwerksnivellierung, sein.

Zu der Hydraulikschaltung 1 gehört ein Schaltungsteil, der für die Aufbereitung eines Hydraulikmittels 109 zuständig ist. Diese Schaltung, die eine Hydraulikmittelaufbereitung 9 ist, sorgt für die Einhaltung eines Drucks in einem Druckband (zwischen einem Minimaldruck und einem Maximaldruck). In Abhängigkeit des Drucks in der Zentraldruckleitung 15 reagiert ein Vorranghydraulikkreisventil 159. Das Vorranghydraulikkreisventil 159 bestimmt, in welchen Hydraulikkreis vorrangig Hydraulikmittel 109 strömt und welche Hydraulikkreise erst bei ausreichender Versorgung der Vorranghydraulikkreise mit Hydraulikmittel 109 versorgt werden. Das Vorranghydraulikkreisventil 159 ist ein hydraulisch eingespanntes 3/3-Ventil, das eine erste Ablassleitung 133 und eine zweite Ablassleitung 134 verzögert freischaltet. Ist der Druck des Hydraulikmittels 109 in den Ablassleitungen 133, 134 ebenfalls oberhalb einer Druckschwelle, wird eine Rücklaufleitung 151 freigeschaltet. Die erste Ablassleitung 133 ist eine Leitung, die eine Ölverteileinrichtung zum Schmieren von Getriebekomponenten beliefert. Hierdurch können Getriebekomponenten wie Zahnradpaare 539, 541, 543 (s. Figur 1) mit Hydraulikmittel 109 für ein Schmieren benetzt werden.

Die Hydraulikmittelaufbereitung 9 umfasst einen Kühler 163, durch den das Hydraulikmittel 109 in Abhängigkeit der Stellung eines Kolbens eines der Sperrventile 103, $103^I$, 103", genauer des Sperrventils 103", geleitet wird. Hierdurch kann wahlweise das Hydraulikmittel 109 gekühlt werden.

Ein weiterer Teil der Hydraulikschaltung 1 ist eine (zweite) Kupplungssteuerungsschaltung 11. Auch gibt es eine Differenzialansteuerung 13.

Außerdem weist die Hydraulikschaltung 1 eine weitere (dritte) Kupplungsansteuerung $11^I$, die auch als Strang $11^I$ bezeichnet werden kann, auf, mit der weitere Motoren des Hybridantriebstrang aufschaltbar sind, z. B. kann auf einem solchen Weg ein optional vorhandener Kompressor oder eine Klimaanlage (nicht dargestellt) auf einen Antrieb zuschaltbar sein. Zur Steuerung dient ein Flussregelventil $81^I$.

Eine, insbesondere zweite, elektrische Maschine, ist an einen Antriebsstrang (nicht dargestellt) über eine weitere Differentialansteuerung $13^I$ ankoppelbar. Hierzu dient ein Steuerventil $155^I$.

Mit Hilfe eines Drucksensors 129" lässt sich ein Grad der Ankopplung und damit eine Bremswirkung der elektrischen Maschine, z. B. in einem regenerativen Betrieb, genau einstellen.

Alle diese Teilschaltungen und Baugruppen gehen stichleitungsartig von der Zentraldruckleitung 15 ab. Die Zentraldruckleitung 15 ist durch die gesamte Hydraulikschaltung 1 als zentrale Versorgungsleitung geführt. Eine Pumpengruppe 19 versorgt die Zentraldruckleitung 15 mit Hydraulikmittel bzw. Hydraulikmedium 109. Die Pumpengruppe 19 setzt sich aus einer ersten Pumpe 21 und einer zweiten Pumpe 23 zusammen. Die erste Pumpe 21 ist eine verbrennungsmotorisch angetriebene Pumpe. Die zweite Pumpe 23 ist eine elektromotorisch angetriebene Pumpe, die auch als Elektro-Pumpe bezeichnet werden kann. Beide Pumpen 21, 23 sind einstellbare Pumpen, sodass Drücke und/oder Fördervolumina veränderlich sind.

Die einzelnen Baugruppen und Teilhydraulikschaltungskomponenten können in weitere Untergruppen aufgeteilt werden. Die Ansteuerung 5 für die Auswahl einer Muffe aus einer Gruppe von Muffen weist zumindest eine Teilgetriebesteuerung 17 zur Ansteuerung von zwei Stellgliedern 41, 43, insbesondere Gleichlaufzylinder. Ein weiteres Steuerventil 155" ist der Teilgetriebesteuerung 17 vorgeschaltet.

Die diversen Ansteuerungen 3, 5, 7, 11, $11^I$, 13, $13^I$ münden, anders gesagt, jeweils in Stellglieder 29, 31, 33, 35, 37, 39, 41, 43. Die einzelnen Hydraulikzweige 65, 65', 65", $65^{III}$, $65^{IV}$, $65^V$, $65^{VI}$, $65^{VII}$ gehen von der Zentraldruckleitung 15 stichleitungsartig ab. Jeder der Hydraulikzweige 65, $65^I$, 65", $65^{III}$, $65^{IV}$, $65^V$, $65^{VI}$, $65^{VII}$ ist auf Grund einer zwischengeschalteten Cut-Off-Ebene 25 von den jeweils anderen Hydraulikzweigen 65, $65^I$, 65", $65^{III}$, $65^{IV}$, $65^V$, $65^{VI}$, $65^{VII}$ entkoppelt. Strömungsmäßig nachgeschaltet nach der Cut-Off-Ebene 25 folgt die Steuerebene 27. Über die Steuerebene 27 können jene Stellglieder 29, 31, 41, 43 eingestellt werden, die Steuerglieder wie ein Flussregelventil $81^{II}$, $8^{III}$ in ihrem Strang haben. Stellglieder, wie das siebte Stellglied 41 und das achte Stellglied 43, können mehrere Positionen einnehmen, z. B. drei ausgewählte Positionen, um eine Muffe zwischen drei Stellungen wie "links", "neutral" und "rechts" hin- und herzuschalten.

Die Stellglieder 29, 31, 33, 35, 37, 39, 41, 43 dienen dazu, Aktuatoren zu bewegen, wie einen Aktuator 55 für die Bewegung einer Schaltmuffe. Solche Aktuatoren 55 sind z. B. ein erster Kupplungsaktuator 57 und ein zweiter Kupplungsaktuator 59. Als Aktuator können z. B. Stößel verwendet werden. Auf Grund der Druckregelventile 51, 53 in der Steuerebene 27 kann der Kupplungsaktuator 57, 59 in eine ausgewählte Position gefahren werden, wie z. B. in die Position "geschlossen" oder "geöffnet". Aufgrund der Druckregelung sind beliebige Zwischenpositionen von dem Kupplungsaktuator 57, 59 einnehmbar. Das erste Stellglied 29 und das zweite Stellglied 31 sind federvorgespannte Differentialzylinder, sodass die Kupplungsaktuatoren 57, 59 in einer Vorzugsstellung gehalten werden, der "normally open"-Stellung. Findet keine aktive Bedruckung statt, so werden die angeschlossenen Kupplungen (vgl. mit Figur 1) in der geöffneten Stellung gehalten.

Darüber hinaus gibt es einen dritten Kupplungsaktuator 61, 61$^I$ und einen vierten Kupplungsaktuator 63, 63$^I$. Der erste Kupplungsaktuator 57 und der zweite Kupplungsaktuator 59 sind auf Kupplungen einer Doppelkupplungsgruppe geführt. Der dritte Kupplungsaktuator 61, 61$^I$ steuert eine Trennkupplung eines Hybridantriebsstrangs (vgl. Figur 1). Der vierte Kupplungsaktuator 63, 63$^I$ steuert ein steuerbares Differentialgetriebe. Dazu hat der hydraulische Strang, der Hydraulikzweig 65", der ebenfalls schwingungsgedämpft ausgeführt ist, ein Steuerventil 155. Die Kupplungsaktuatoren 57, 59, 61, 61$^I$, 63, 63$^I$ sind als lineare Zylinder gestaltet.

Um die Druckregelventile 51, 53 sind Bypass-Leitungen 67, 68 herumgeführt. In einer ersten Bypass-Leitung 67 ist ein erstes Steuerventil 71 eingebaut. In einer zweiten Bypass-Leitung 68 ist ein zweites Steuerventil 73 eingebaut. Die Sperrventile 71, 73 sind Zweizustandssperrventile. Das bedeutet, die Sperrventile 71, 73 können zwischen einem ersten Zustand und einem zweiten Zustand wechseln.

Wie in Figur 2 zu sehen ist, ist den beiden Druckregelventilen 51, 53 für die Kupplungsaktuatoren 57, 59 ein gemeinsames Sperrventil 103 vorgeschaltet. Dieses federvorgespannte Sperrventil 103 schaltet bei fehlender Bestromung bzw. bei einem zu geringen Taktverhältnis in eine Durchlassstellung 105, 105$^I$, 105". In dieser, insbesondere nur bei vorhandener Federkrafteinwirkung eingenommener, Durchflussstellung 105 schaltet das Sperrventil 103 den an das Sperrventil 103 heranführenden Hydraulikzweig 65 durch. Das Hydraulikmedium 109, das in der Zentraldruckleitung 15 vorhanden ist, kann an die Druckregelventile 51, 53 strömen. Das Sperrventil 103 ist ein Sperrventil, das vier Zustände aufweist, wobei aber hierbei zwei Hauptzustände 105, 107 feststellbar sind. Der Zustand 105 der Durchleitung lässt sich in weitere Unterzustände 105, 105$^I$, 105" unterteilen.

Das Hydraulikmedium 109 steht - im Falle eines Normalbetriebs - unter einem solchen Druck, dass die einzelnen Hydraulikzweige 65, 65$^I$, 65", 65$^{III}$, 65$^{IV}$, 65$^V$, 65$^{VI}$, 65$^{VII}$ stets ausreichend mit Hydraulikmittel versorgt werden können. Treten aber vermehrt Schaltwechsel auf, so kann es sein, dass das Hydraulikmedium 109 zu priorisieren ist. Die Zentraldruckleitung 15 bietet das höchste Druckniveau, insbesondere jenseits der Pumpengruppe 19. Das Sperrventil 103 erzeugt (nur) ein Druckgefälle im mbar-Bereich. Eine wesentliche Beeinflussung des Drucks erfolgt durch die Druckregelventile 51, 53. In Abhängigkeit des Drucks nach den Druckregelventilen 51, 53 stellt sich die Position des ersten Stellglieds 29 und des zweiten Stellglieds 31 ein. Durch die Druckregelung kann ein Überblenden von einer Kupplung auf die andere Kupplung erfolgen.

Geht das Sperrventil 103 in eine Ablassstellung 107 für das Hydraulikmittel bzw. Hydraulikmedium 109, kann der Zustand eintreten, dass das Druckniveau hinter den Druckregelventilen 51, 53 höher ist als vor den Druckregelventilen 51, 53 (in Bezug auf die Arbeitsrichtung betrachtet). In einer solchen Situation wirken sich die Bypass-Leitungen 67, 68 aus. Das Sperrventil 71, 73, in dessen Bypass-Leitung 67, 68 das höhere Druckniveau hinter dem Sperrventil 71, 73 ist als vor dem Sperrventil 71, 73, schaltet durch. Das Hydraulikmedium 109 kann aus dem Stellglied 29, 31 ausströmen. Die Sperrventile 71, 73 in den Bypass-Leitungen 67, 68 sind antiparallel zu den Druckregelventilen 51, 53 angeordnet. Die Druckregelventile 51, 53 haben eine Durchflussrichtung 89, 114 (siehe Pfeile in den Ventilen 51, 53). Die Durchflussrichtung 89, 114 ergibt sich aus einer regulär vorgesehenen Strömungsrichtung von einer Versorgungsseite 101 zur B-Seite 99 des jeweiligen Druckregelventils 51, 53. Die Druckregelventile 51, 53 sind dafür ausgelegt, zumindest in einer Stellung ein Strömen des Hydraulikmediums 109 von der Versorgungsseite 101 zu der Verbraucherseite, der B-Seite 99 zuzulassen. Die Sperrventile 71, 73 lassen im durchgeschalteten Zustand ein Durchströmen entgegengesetzt zur Hauptströmungsrichtung zu und sperren ein Strömen in umgekehrter Richtung. Das jeweilige Sperrventil 71, 73 ist antiparallel zur Durchflussrichtung 89, 114 des Druckregelventils 51, 53 in der Bypass-Leitung 67, 68 eingebaut.

Wie anhand der Schaltbildsymbole zu erkennen ist, ist das Druckregelventil 53 ein Dreizustandsventil. Einer der Schaltzustände des Druckregelventils 53 ist ein Sperrzustand 79. In dieser Stellung eines Kolbens (vgl. auch einen Kolben 97 des Druckregelventils 51) des Druckregelventils 53 hat das Druckregelventil 53 einen Sperrzustand 79 eingenommen. Hierdurch kann eine Zuleitung 85 zu dem zweiten Stellglied 31 abgekoppelt werden. In diesem Zustand wird die Zuleitung 85 nur noch über ein Rückschlagsventil 83 gesteuert. Ein Druckabbau in der Zuleitung 85 kann in dem Fall, in dem das Druckregelventil 53 sich in dem Sperrzustand 79 befindet, über die Drehdurchführungen des Kupplungsaktuators 59 und über das Rückschlagsventil 83 erfolgen. Das Rückschlagsventil 83 sorgt für eine schnellere Druckreduzierung in Richtung auf die Versorgungseite 101. Aufgrund eines Druckunterschieds gelangt das Rückschlagsventil 83 in eine Durchflussrichtung entgegen der üblichen Durchflussrichtung 89.

Aus dem Schaltbild gem. Figur 2 ist zu entnehmen, dass das erste Druckregelventil 51 ein elektromagnetisch ansteuerbares Dreistellungsdruckregelventil ist. Mit anderen Worten, das Druckregelventil 51 ist ein 3/3-federvorgespanntes Elektromagnetventil 91. Das 3/3-Elektromagnetventil 91 bietet eine erste Stellung, eine zweite Stellung und eine dritte Stellung. Eine der Stellungen des 3/3-Elektromagnetventils 91 ist eine Durchflussstellung 115. Eine der Stellungen des Elektromagnetventils 91 ist eine Ablaufstellung 111. Des Weiteren hat das 3/3-Druckregelventil 91 eine Mittenstellung 113. In Abhängigkeit einer Taktungsansteuerung des Magneten des Elektromagnetventils 91 nimmt das Ventil eine der Stellungen wie die Ablaufstellung 111, wie die Mittenstellung 113 oder wie die Durchflussstellung 115 ein. Mithilfe des Elektromagneten kann der Kolben 97 des 3/3-Druckregelventils 91 bewegt werden. Darüber hinaus hat das 3/3-Elektromagnetventil 91 eine Rückkopplung 95, die eine hydraulische Rückkopplung ist. Das 3/3-Druckregelventil 91 hat eine Feder 121, die ebenfalls den Kolben 97 bewegen kann. Befindet sich der Kolben 97 bzw. das 3/3-federvorgespannte Elektromagnetventil 91 in der Ablaufstellung 111, kann das Hydraulikmedium 109 über eine erste Sumpfrückflussleitung 117 ausströmen, das sich in jenem Abschnitt 139 der Hydraulikschaltung 1 befindet, der über die erste Zuleitung 141 in den Arbeitsraum 145 des Linearzylinders führt, der ein solcher ist wie der Linearzylinder 147. Die Linearzylinder wie der Linearzylinder 147 haben jeweils eine Zuleitung 141, 143. An den Zuleitungen 141, 143 ist ein Drucksensor 125, 127 angeschlossen. An jeder Zuleitung 141, 143 ist ein Dämpfer 123 angeschlossen. Der Dämpfer 123 ist ein federvorgespannter Dämpfer. Befindet sich das 3/3-federvorgespannte Elektromagnetventil 91 ausreichend lange in der Ablaufstellung 111, gelangt nicht nur das Hydraulikmedium 109 aus der Zuleitung 141, sondern auch das Hydraulikmedium 109 aus dem Dämpfer 123 zu der Sumpfrückflussleitung 117.

Das zweite Druckregelventil 53 ist ähnlich zu dem ersten Druckregelventil 51 realisiert, sodass die Erklärungen zu dem ersten Druckregelventil 51 auch auf das zweite Druckregelventil 53 übertragbar sind.

Nicht nur das 3/3-Elektromagnetventil 91, sondern auch weitere Ventile haben Sumpfrückflussleitungen. Das Sperrventil 103 hat eine Sumpfrückflussleitung 119.

Je nach Stellung der Kolben wie des Kolbens 97 kann Hydraulikmedium 109 von der jeweiligen B-Seite 99 über die Sumpfrückflussleitung 117, 119 in einen Tank 149 gelangen. In einer anderen Stellung des Kolbens 97 kann Hydraulikmedium 109 zu einem Verbraucher wie dem ersten Stellglied 29 oder dem zweiten Stellglied 31 gelangen. Das Sperrventil 103 hat somit zumindest eine Durchflussstellung 105 und eine Ablassstellung 107. Dementsprechend hat das 3/3-Elektromagnetventil 91 eine entsprechende Ablaufstellung 111 und eine Durchflussstellung 115.

Die Hydraulikschaltung 1 hat in drei Hydraulikzweigen $65^I$, $65^{III}$, $65^V$ Flussregelventile 81, $81^I$, $81^{II}$, $8^{III}$.

Den Pumpen 21, 23 nachgeschaltet sind (weitere) Sperrventile $103^I$, 103". Die Sperrventile $103^I$, 103" sind hydraulisch eingespannte und durch Federn vorgespannte Sperrventile. Diese Sperrventile $103^I$, 103" geraten nur dann in eine (bestimmte) Durchflussstellung, wenn in der Zentraldruckleitung 15 entweder ein ausreichender Druck vorhanden ist oder wenn das von der Pumpe 21 erzeugte Druckniveau des Hydraulikmittels 109 ausreichend hoch ist, um kein den Betriebsdruckbereich verlassendes Druckgefälle von der Zentraldruckleitung 15 zu erzeugen.

Übersteigt ein Druck in der Zentraldruckleitung 15 ein eingestelltes Druckniveau, indem ein Überdruck 87 in einem Bereich der Hydraulikschaltung 1 auftritt, so reagiert ein Druckwaagenventil 137. Die Hydraulikschaltung 1 hat Ablassleitungen 133, 134, 135. Die erste Ablassleitung 133 ist eine gedrosselte Ablassleitung, in der ein Überdruck 87 entstehen kann. Die dritte Ablassleitung 135 ist eine über das Ventil 103 gesteuerte Ablassleitung, bei dem das Ventil 103 als Ablassventil arbeitet.

Die Hydraulikschaltung 1 hat wenigstens fünf Drucksensoren 125, 127, 129, $129^I$, $129^{II}$. Anhand der Drucksensoren 125, 127, 129, $129^I$, 129" und der Möglichkeit, Druckdifferenzen zwischen den durch die Drucksensoren 125, 127, 129, $129^I$ gemessenen Werten zu berechnen, können Druckniveaus und Druckbänder auf der Versorgungsseite 101 der Ventile wie dem Druckregelventil 51, 53 und den Flussregelventilen 81, 81', 81 ", $8^{III}$ eingestellt werden.

Durch eine Feder $121^I$ wird das Druckwaagenventil 137 auf einem Niveau bzw. in einer Sperrstellung gehalten, bis der Überdruck 87 den Kolben des Druckwaagenventils 137 in Durchlassstellung schaltet, damit ein Rücklauf Richtung Tank 149 freigegeben wird. Zwischen dem Tank 149 und dem Druckwaagenventil 137 ist in der Rücklaufleitung 151 ein Filter 153 eingebaut, der Schmutz des Tanks 149 bzw. des Hydraulikmediums 109 im Tank 149 herausfiltern kann, jedoch im Falle des Überdrucks 87 des Hydraulikmediums 109 das Hydraulikmedium 109 über die Rücklaufleitung 151 in Richtung Tank 149 abströmen lassen kann.

Stellt einer der Drucksensoren 125, 127 einen Überdruck in einer Zuleitung 141, 143 fest oder muss z. B. aufgrund einer sicherheitskritischen Situation eine Kraftflusstrennung über eine Kupplung kurzfristig bewirkt werden, kann Hydraulikmedium 109 über die Sumpfrückflussleitung 117, 119 in dem bzw. aus dem entsprechenden Hydraulikzweig 65 ausgebracht werden. Ein schnelleres Abströmen wird durch die Sperrventile 71, 73, insbesondere als Umgehungspfade (Bypass-Leitung 67, 68) um die Druckregelventile 51, 53, sichergestellt. Die Sperrventile 71, 73 sind als Rückschlagsventile realisiert. Eine kurzfristige Trennung der Kupplungen unter Nutzung der federvorgespannten Kupplungsaktuatoren 57, 59 ist möglich.

Die Hydraulikschaltung 1 ist eine in einer Steuerplatte 167 integrierte Hydraulikschaltung, die jenseits der Steuerplatte 167, d. h. außerhalb eines Randes 169 der Steuerplatte 167, die größervolumigen Bauteile und Baugruppen sowie jene Komponenten aufweist, die andernorts zu platzieren sind. Stellglieder, wie zum Beispiel ein erstes Stellglied 29, ein zweites Stellglied 31 oder ein drittes Stellglied 33, sind als Aktuatoren wie der Aktuator 55 unmittelbar auf das von ihnen zu steuernde Glied wie eine Kupplung anzuordnen. Pumpen 21, 23 einer Pumpengruppe 19 müssen mit einem Hydraulikmittelreservoir wie einem Tank 149 in unmittelbarer Verbindung stehen, sodass die Pumpen 21, 23 außerhalb der Steuerplatte 167 unmittelbar im Bereich des Tanks 149 angeordnet sind. Für das Ein- und Austreten des Hydraulikmittels 109 weist die Steuerplatte 167, z. B. im Bereich des Steuerplattenrandes 169, Verbindungselemente (eingezeichnet sind beispielhaft die Verbindungselemente 173, 173$^I$, 173", 173$^{III}$, 173$^{IV}$, 173$^V$) für Leitungen bzw. für die Hydraulikplatte (Steuerplatte 167) auf. Für einen Fachmann verständlich ist, dass der als Steuerplatte 167 zusammengefasste Teil des Schaltplans auch auf mehrere Steuerplatten aufgeteilt werden kann, z. B. wenn die räumlichen Verhältnisse des Gehäuses 545 des Getriebes wie dem Doppelkupplungsgetriebe 505 oder Gewichtserfordernisse oder Gewichtsverteilungen des Getriebes es erforderlich machen. Dementsprechend sind die Verbindungselemente wie die Verbindungselemente 173, 173$^I$, 173$^{II}$, 173$^{III}$, 173$^{IV}$, 173$^V$ zwischen den Teilbereichen wie z. B. den Hydraulikzweigen 65, 65$^I$, 65$^{II}$, 65$^{III}$, 65$^{IV}$, 65$^V$, 65$^{VI}$, 65$^{VII}$ anzuordnen.

So können an die Verbindungselemente 173$^I$, 173", 173$^{III}$ die Stellglieder 29, 31, 33 angeschlossen werden, die Kupplungsaktuatoren 57, 59, 61 sind. Genauso können Verbindungselemente 173$^{IV}$, zum Beispiel der dritten Ablassleitung 135, genutzt werden, um Hydraulikmittel 109 zur Kühlung der an die Kupplungsaktuatoren 57, 59, 61 angeschlossenen Kupplungen über jene zu leiten.

Zur Betätigung einseitig einzustellender Kfz-Komponenten gibt es das weitere Stellglied 37, dessen Strang 11$^I$ dem Strang 11 zu dem dritten Stellglied 33 entspricht.

Die Steuerplatte 167 dient als Gehäuse und Schutzelement für Leitungsverbindungen zwischen Ventilen wie einem ersten Druckregelventil 51, einem zweiten Druckregelventil 53, einem Sperrventil 103 oder einem Steuerventil 157, insbesondere für eine Steuerung sonstiger Kfz-Komponenten. Die Steuerplatte 167, die auch als Steuergehäuse bezeichnet werden kann, stellt die Basis für Dämpfer 123, 123$^I$, 123". Eine der durch die Steuerplatte 167 zur Verfügung gestellten Leitungen ist die Zentraldruckleitung 15, die auch als Systemdruckleitung bezeichnet werden kann. Die Steuerplatte 167 ist der Träger für Drucksensoren wie für den Drucksensor 127.

Hierbei sei angesprochen, dass solche Ventile wie das Sperrventil 103 eines ersten Hydraulikzweigs 65 in der Steuerplatte als zweigeteiltes Ventil realisierbar sind, von denen ein erstes Ventil ein Vorsteuerventil 171 ist und das zweite Ventil, als Hauptsteuerventil 172 bezeichnet, die Schaltstellungen wie Durchflussstellungen 105, 105$^I$, 105" und zumindest eine Ablassstellung 107 bietet. Mit anderen Worten, dass zweite Ventil, das Hauptsteuerventil 172 bzw. der zweite Teil des Sperrventils 103 ist das eigentliche Steuerventil, wobei die Ansteuerung hydraulisch über das Vorsteuerventil 171 erfolgt. Hierfür ist zwischen dem Vorsteuerventil 171 und dem eigentlichen Steuerkolben eine Steuerleitung 177 ausgebildet. Über die Steuerleitung 177 wird der hydraulisch zu betätigende Hauptkolben des Ventils 172 betätigt.

Das Sperrventil 103 ist ein durch das Vorsteuerventil 171 pilotgesteuertes Ventil, über das die gesamte Doppelkupplungsbaugruppe, bestehend aus zwei Kupplungen, hydraulisch versorgt und auch betätigt werden kann. Das Sperrventil 103 kann in Abhängigkeit des hydraulischen Drucks in der Zentraldruckleitung 15 unterschiedliche Strömungspfade zu den Kupplungen freigeben, sodass in allen Durchschaltzuständen 105, 105$^I$, 105" die Kupplungen betätigbar bleiben, während bei weiteren Schaltzuständen 105, 105$^I$ z. B. noch eine mögliche Kühlung, eventuell sogar ein Rezirkulation hinzukommt.

Weitere in der Steuerplatte 167 integrierte Bauteile sind Bypass-Leitungen wie die erste Bypass-Leitung 67 und die zweite Bypass-Leitung 68. In diesen Bypass-Leitungen 67, 68 sind, insbesondere von dem Rand 169 der Steuerplatte 167 nicht sichtbare, Sperrventile 71, 73, z. B. in der Form von Zweizustandssperrventilen integriert. Durch das Konzept der Steuerplatte 167 als Gehäuse für wesentliche Teile der Hydraulikschaltung 1 bietet sich die Möglichkeit, selbst 3/3-federvorgespannte Elektromagnetventile 91 in die Steuerplatte (zumindest teilweise) zu integrieren.

Die Steuerplatte 167 bietet neben ihrer Zentraldruckleitung 15 komplette Hydraulikzweige 65, 65', 65", 65$^{III}$, 65$^{IV}$, 65$^V$, 65$^{VI}$ von denen maximal nur die Stellglieder 29, 31, 33, 37, 39, 41, 43 außerhalb der Steuerplatte 167 angeordnet sind. Selbst die Steuerung einer Hydraulikmittelaufbereitung 9 kann (zumindest mit ihren wesentlichen Teilen) wie einem Vorranghydraulikkreisventil 159 in der Hydraulikplatte bzw. Steuerplatte 167 integriert sein.

Wie sich aus den hydraulischen Symbolen der Figur 2 erschließt, hat die Hydraulikschaltung 1 sechs stichleitungsartig abgehende Hydraulikzweige 65, 65$^I$, 65", 65$^{III}$, 65$^{IV}$, 65$^{VI}$, 65$^{VII}$, die Schaltkreise zur Ansteuerung 3, 5, 7, 11, 11$^I$, 13, 13$^I$ darstellen. Einige Hydraulikzweige, z. B. Hydraulikzweig 65$^V$, sind Teilgetriebesteuerungen 17. Ein erster Hydraulikzweig 65 stellt die Ansteuerung 3 für die Kupplungsaktuatoren 57, 59 und somit für die Kupplungen (vgl. Figur 1).

Die Hydraulikschaltung 1 in ihrer Steuerplatte 167 bietet ausreichende Robustheit, um auch als Lkw-Getriebesteuerung eines Doppelkupplungsgetriebes mit acht Gängen (1. Alternative: nur Vorwärtsgänge; 2. Alternative: Vorwärts- und Rückwärtsgänge) eingesetzt zu werden. Aufgrund der größeren Volumenströme des Hydraulikmittels 109 für die Stellglieder 29, 31, 37, 39, 41, 43 sind viele Steuerventile, z. B. das Steuerventil 103, und insbesondere Ventile einer Cut-Off-Ebene 25 als pilotgesteuerte Ventile, d. h. mit Vorsteuerventilen 171, 171$^I$, ausgestaltet.

Mit anderen Worten, die Steuerplatte 167 kann - in funktioneller Hinsicht - von Anschlüssen 173$^V$ aus startend als Gehäuse für eine Zentraldruckleitung 15 betrachtet werden, von der Hydraulikzweige 65, 65$^I$, 65", 65$^{III}$, 65$^{IV}$, 65$^V$ abgehen, die Ventile 103, 171 in einer Cut-Off-Ebene 25 und Ventile 51, 53 in einer nachgeschalteten Steuerebene 27 aufweisen. Zur Zurückführung von Hydraulikmittel 109, das z. B. durch die Pumpengruppe 19 zu viel gefördert ist, bietet die Steuerplatte 167 wenigstens drei Ablassleitungen 133, 134, 135, wodurch Hydraulikmittel 109 in den Tank 149 über wenigstens eine sog. Rücklaufleitung 151 zurückgebracht werden kann. Hierbei kann eine Leckage eines Verbindungselements 173 der Ablassleitung 133 als Druckabbaumittel des Hydraulikmittels 109 bewusst gestaltet sein. Hierdurch bieten ausgewählte Verbindungselemente 173 weitere Sicherheitsfunktionen für die Steuerplatte 167.

Einzelne Verbindungselemente 173$^{III}$ können nicht nur als Steckverbinder gestaltet sein, sondern darüber hinaus als Drosseln für das Hydraulikmittel 109. Soll ein verzögertes An- und/oder Abströmen aus Linearzylindern, z. B. bei der Ansteuerung 11 für Kfz-Komponenten, sichergestellt werden, so können drosselnde Verbindungselemente 173$^{III}$ eine Entkopplung von einem Systemdruck in der Zentraldruckleitung 15 oder von dem Druck der Pumpengruppe 19 herbeiführen.

Die aus dem Tank 149 das Hydraulikmittel 109 ansaugenden Pumpen 21, 23, die zusammen die Pumpengruppe 19 bilden, sind außerhalb der Steuerplatte 167 an den Verbindungselementen 173$^{V}$ für die Pumpen 21, 23 angeschlossen. Der Hydraulikzweig 65$^{VII}$, der als Hydraulikzweig 65$^{VII}$ für die Hydraulikmittelaufbereitung 9 anzusehen ist, umfasst Sperrventile, z. B. das Sperrventil 103$^{IV}$, wodurch eine Druckstabilisierung in der Zentraldruckleitung 15 herstellbar ist.

Von der Zentraldruckleitung 15 führen die Hydraulikzweige 65, 65$^{I}$, 65", 65$^{III}$, 65$^{IV}$, 65$^{V}$, 65$^{VI}$, 65$^{VII}$ weg. In dem Hydraulikzweig 65$^{VII}$ für die Hydraulikmittelaufbereitung 9 ist ein über das Vorsteuerventil 171$^{I}$ anzusteuerndes Vorranghydraulikkreisventil 159 dafür da, ausgewählten Hydraulikzweigen, wie dem ersten Hydraulikzweig 65 für Kupplungsansteuerungen und Kupplungskühlung einen Vorrang vor weniger wichtigen Hydraulikkreisen wie der Ansteuerung 7 für Karosseriekomponenten zu gewähren. Das Vorranghydraulikkreisventil 159 ist ein hydraulisches Druckwaagenventil mit drei Schaltzuständen. Es schaltet erst bei ausreichendem Druck und einer Ansteuerung durch das Vorsteuerventil 171$^{I}$ die Rücklaufleitung 151. In einem eher einzunehmenden Schaltzustand wird die Ablassleitung 135, die für die Kühlung der Kupplungen zuständig ist, freigeschaltet. Reicht der über Drucksensoren wie der über den Drucksensor 127 gemessene Druck in dem Hydraulikmittel 109 nicht aus, so verharrt aufgrund der gedämpften Ablassstellung des Vorsteuerventils 171$^{I}$ das Vorranghydraulikkreisventil 159 in einer Sperrstellung. Das von den Pumpen 21, 23 geförderte Hydraulikmittel 109 gelangt in diesem Fall über das Sperrventil 103 zu den Druckregelventilen 51, 53 und somit zu den Kupplungsaktuatoren 57, 59. Stellt der Drucksensor 127 eine ausreichende Versorgung und den eingestellten Betrieb durch das Druckregelventil 53 zugunsten des Kupplungsaktuators 59 fest, so schaltet das Vorsteuerventil 171 einen Kolben des Steuerteils des Sperrventils 103 von einer ersten Durchflussstellung 105" in eine zweite Durchflussstellung 105$^{I}$ oder in eine dritte Durchflussstellung 105. Die dritte Durchflussstellung 105 bietet eine gedrosselte Durchleitung für das Hydraulikmittel 109 zu der Ablassleitung 135. In dem zweiten Schaltzustand, in der Durchflussstellung 105$^{I}$ gelangt das Hydraulikmittel 109 drosselfrei, d. h. ungedrosselt bis zu dem Verbindungselement im Rand 169 der Steuerplatte 167 der Ablassleitung 135. In der ersten Durchflussstellung 105" gelangt Hydraulikmittel 109 ausschließlich in den Teil des Hydraulikzweigs 65, der für die Steuerung und Regelung der Kupplungsaktuatoren 57, 59 zuständig ist. Mit Hilfe der 3/3-Elektromagnetventile 91 können beliebige Schließgerade der Kupplungsaktuatoren 57, 59 eingestellt werden. Schwingungen auf Leitungen zu den Kupplungsaktuatoren 57, 59 lassen sich durch den Dämpfer 123 verhindern, zumindest aber abmildern. Gelangen unkontrollierte Rückschläge auf die Kupplungsaktuatoren 57, 59, können sich daraus ergebende Überdrücke über die Bypass-Leitungen 67, 68 und den darin enthaltenen Sperrventilen 71, 73 in Richtung auf das Sperrventil 103 abgeleitet werden, Soll, z. B. aufgrund eines Messergebnisses des Drucksensors 127, ein Schnelldruckabbau in den Leitungen zu den Kupplungsaktuatoren 57, 59 hergestellt werden, kann das jeweilige Druckregelventil 51, 53 in eine erste, das Hydraulikmedium 109 ableitende Stellung gebracht werden. Zugleich kann über die Bypass-Leitung 67, 68 Hydraulikmittel ausgebracht werden. Hierdurch ist eine Schnellentladung bzw. ein Schnellablass in Richtung auf den Tank 149 möglich.

Dank des Sperrventils 103 können unerwünschte oder unkontrollierte Betriebszustände des Kraftfahrzeuges in Bezug auf seine Kupplungen durch Abkoppeln der Kupplungsaktuatoren 57, 59 von dem übrigen Hydraulikkreis der Hydraulikschaltung 1 abgekoppelt werden. Gleichermaßen kann eine Teilgetriebesteuerung wie die Teilgetriebesteuerung 17 mit Hilfe des Sperrventils 103$^{III}$ totgesetzt werden. Einzelne Cut-Off-Ventile, z. B. die Steuerventile 155, 155$^{I}$, der Cut-Off-Ebene 25 sind Ventile, die in den hydraulischen Ansteuerstrecken Dämpfer 123$^{I}$, 123" in jenen Hydraulikzweigen 65$^{II}$, 65$^{IV}$ aufweisen, in denen hydraulische Schwingungen befürchtet werden können. Die für ein Gangeinlegen zuständigen Stellglieder 41, 43, die z. B. Synchronisierungen ansteuern können, können bei Gangwechseln und Drehzahlanpassungen Rückkopplungen oder Schwingungen in das Hydraulikmittel 109 der Hydraulikschaltung 1 bewirken. Für solche Fälle dämpfen die Dämpfer 123$^{I}$, 123" und stabilisieren die Lage der jeweiligen Kolben der Cut-Off-Ebenen-Ventile in der Cut-Off-Ebene 25.

Eine weitere, aus dem Schaltplan zu entnehmende Stabilisierungsmaßnahme ist der Einbau von Blenden 170, 170$^{I}$ in den Steuerleitungen zwischen den Vorsteuerventilen 171, 171$^{I}$ und dem jeweils steuernden Ventil 172, 159. Nachdem Untersuchungen an Versuchsaufbauten des Schaltplans der Hydraulikschaltung 1 zeigten, wo mit Schwingungen zu rechnen ist, wird ggf. zur Schwingungsunterdrückung jeweils eine Blende 170, 170$^{I}$ in Leitungen wie den Steuerleitungen eingebaut, die von den Vorsteuerventilen 171, 171$^{I}$ kommen.

Aufgrund der Drosseln in den Verbindungselementen 173$^{III}$ der Ansteuerung 11 für Kfz-Komponenten sind keine schwingenden Rückkopplungen aus den Stellgliedern für die Kfz-Komponenten zu erwarten, sodass das Steuerventil 81 für die Ansteuerung 11 für Kfz-Komponenten mit einer direkten Pilotansteuerung durch ein Vorsteuerventil (nicht eingezeichnet) des Steuerventils 81 operieren könnte (ungedämpfte Pilotansteuerung). Für die Kupplungsaktuatoren 57, 59 wiederum macht es den meisten Sinn, den Dämpfer 123 im Nahbereich des Drucksensors 127 unmittelbar in der Zuleitung zu dem jeweiligen Kupplungsaktuator 57, 59 zu platzieren. Schwingungen in der Zuleitung zu dem jeweiligen Kupplungsaktuator 57, 59 werden über den Dämpferinhalt 123 gedämpft. Zur Stabilisierung der Kolbenlage des Kolbens des jeweiligen Druckregelventils 51, 53 trägt die hydraulische Rückkopplung auf den Kolben noch zusätzlich bei. Eine weitere mögliche Maßnahme liegt in der Auslegung der Durchmesser und dem Anschlussverhalten der Verbindungselemente 173$^I$, 173'' zu den Kupplungsaktuatoren 57, 59. Die Druckregelung über die Druckregelventile 51, 53 des ersten Hydraulikzweigs 65 der Ansteuerung 3 für Kupplungen hat mehrere Maßnahmen der Stabilisierung. Zusätzlich kann mit Hilfe des Drucksensors 127 eine elektronische Stabilisierung hydraulischer Umladevorgänge und Schwingungen erfolgen.

Eine der beiden Pumpen 21, 23 ist eine hydraulisch geregelte, variable Pumpe 21. Stellt der Drucksensor 127 fest, dass sämtliche Komponenten der Hydraulikschaltung 1 zuverlässig betreibbar sind, kann Energie durch eine hydraulische Reduktion der Förderleistung der verbrennungsmotorisch angetriebenen Pumpe 21 herbeigeführt werden. Aufgrund der über Sperrventile abgekoppelten und daher ausreichend stabilisierten Zentraldruckleitung 15 kann eine phasenweise zuverlässige Kupplungsdruckregelung des Hydraulikzweigs 65 sichergestellt werden, selbst wenn die hydraulisch geregelte Pumpe 21 verzögerte Anlaufphasen hat.

Tritt einmal ein Problem mit der Pumpengruppe 19 auf, so können Ventile wie das Vorranghydraulikkreisventil 159 oder das Sperrventil 103 nach und nach Hydraulikzweige abschalten, die aus Sicherheitsaspekten heraus geringere Bedeutungen für das Kraftfahrzeug haben. Somit bleibt Hydraulikmittel 109 für ein weiteres Schalten der Kupplungsaktuatoren 57, 59 in Abhängigkeit des Reservoirs der Zentraldruckleitung 15 erhalten.

Wie anhand der geringen Anzahl an elektrischen Messaufnehmern, z. B. des Drucksensors 127, zu erkennen ist, ist die Hydraulikschaltung 1 auf der hydraulischen Entwurfsebene bereits mit zahlreichen Sicherheitsfunktionen ausgestattet, sodass eine Entlastung des Steuergeräts der Hydraulikschaltung 1 erfolgt.

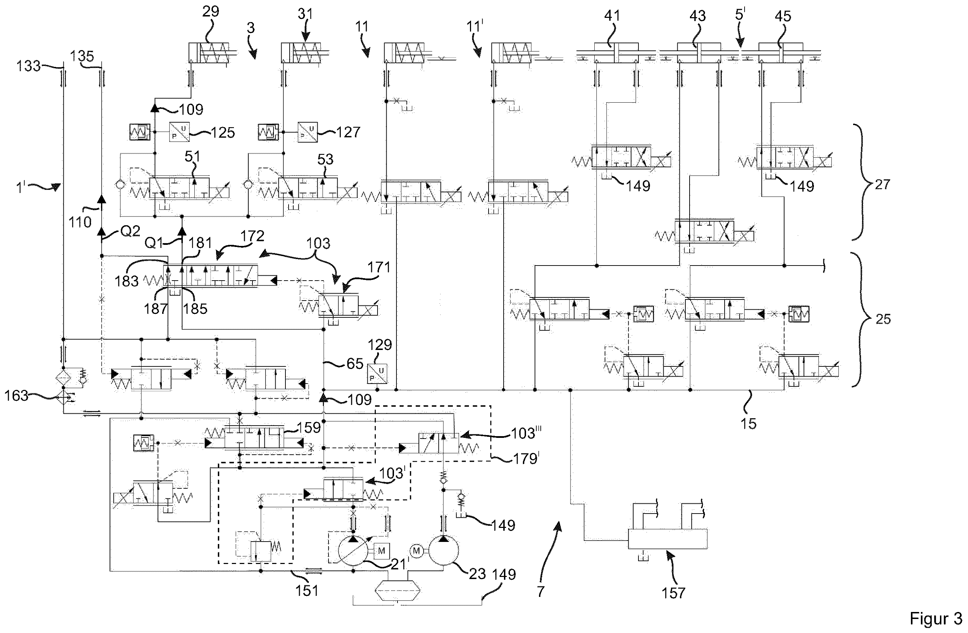

Figur 3 zeigt eine weitere Ausführungsform eines geeigneten Hydraulikschaltplans als Hydraulikschaltung 1$^I$ in schematischer Darstellung. Die in den Figuren 3 bis 6 gezeigten Schaltpläne bzw. Schaltplanteile 1$^I$, 1$^{II}$, 1$^{III}$ sind in weiten Teilen ähnlich, wenn nicht sogar identisch zu dem Schaltplan 1 nach Figur 2. Daher werden identische, gleiche und auch ähnliche Teile, Komponenten und Baugruppen mit den gleichen Bezugszeichen versehen, selbst wenn sie untereinander zwischen den Ausführungsbeispielen geringfügige Abweichen aufweisen sollten.

Aufgrund der baugruppenweisen Ähnlichkeit und aufgrund der ähnlichen Funktionalität von Hydraulikschaltungen 1, 1$^I$, 1$^{II}$, 1$^{III}$ zwischen den Figuren 2 bis 6 sind viele der Erklärungen und Erläuterungen zu einer Hydraulikschaltung 1, 1$^I$, 1$^{II}$, 1$^{III}$ unmittelbar auf die anderen übertragbar. Aus Gründen der Effizienz und Lesbarkeit sollen die Erklärungen zu einer Hydraulikschaltung 1, 1$^I$, 1$^{II}$, 1$^{III}$ nicht bei der Vorstellung einer weiteren Hydraulikschaltung 1, 1$^I$, 1$^{II}$, 1$^{III}$ wiederholt werden, sondern die Erklärungen gelten auch im Zusammenhang mit den übrigen Schaltungen 1, 1$^I$, 1$^{II}$, 1$^{III}$ ausgeführt.

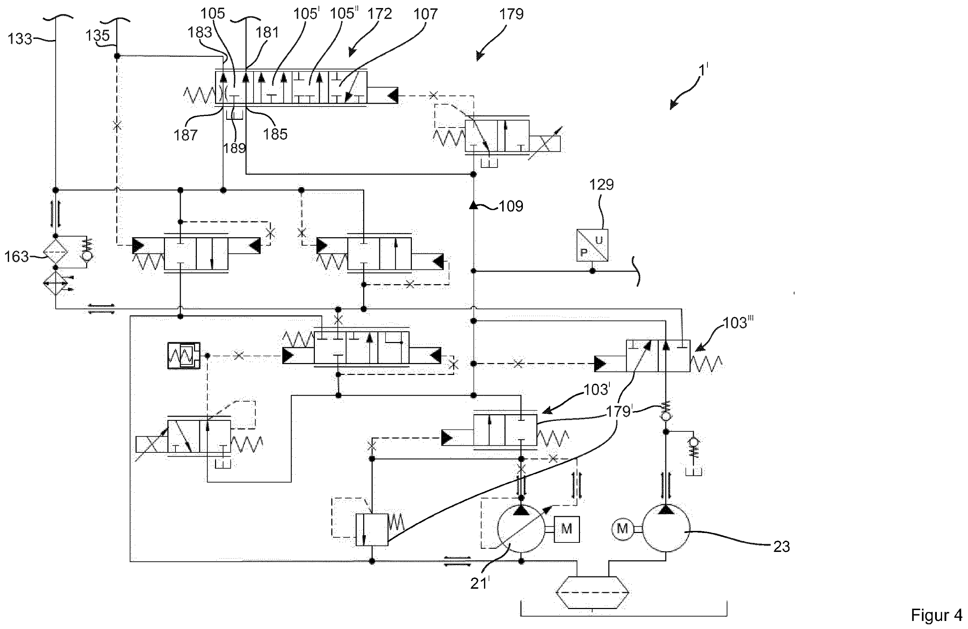

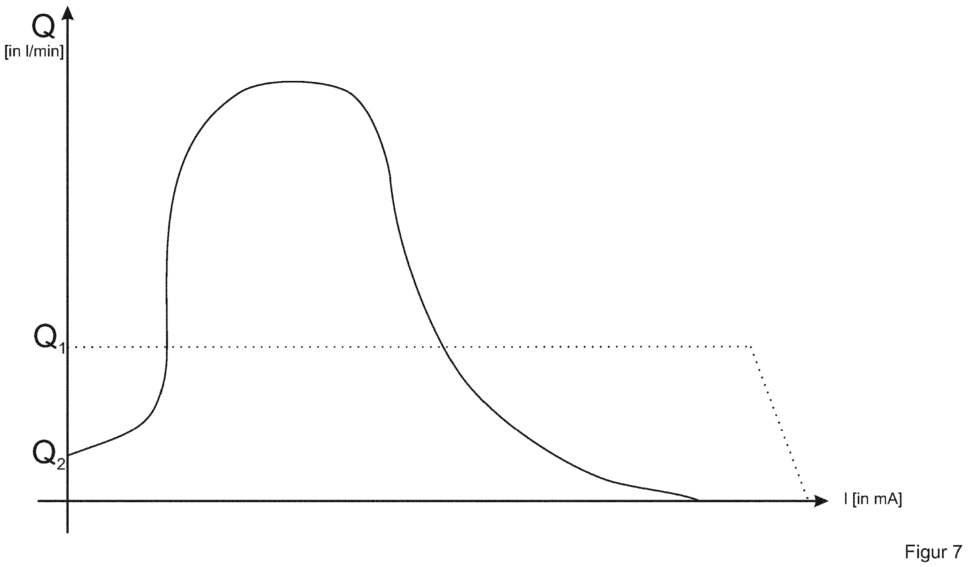

Die Schaltung 1$^I$ nach Figur 3, zu der in Figur 4 ein unten, links angeordneter Ausschnitt aus Figur 3 größer dargestellt ist, muss weniger Komponenten steuern als die Schaltung 1 nach Figur 2. Daher werden nur die Ansteuerungen bzw. Stränge 3, 5$^I$, 7, 11 und 11$^I$ benötigt. Die Versorgung der Stränge 3, 5$^I$, 7, 11, 11$^I$ erfolgt zwar aus der Zentraldruckleitung 15; diese wiederum bezieht jedoch das unter Druck stehende Hydraulikmittel 109 von den Pumpen 21$^I$, 23. Die Pumpen 21$^I$, 23 sind unterschiedlich angetriebene Pumpen. Besonders bei einem Hybridantriebsstrang ähnlich zu dem in Figur 1 dargestellten Hybridantriebsstrang 500 ergibt sich das Problem, dass der Verbrennungsmotor phasenweise still gesetzt ist, somit die von ihm angetriebene Pumpe 21$^I$ auch still steht. Zwar kann durch die Vorrangschaltung 179$^I$ sichergestellt werden, dass eine stillgesetzte, womöglich sogar in umgedrehter Richtung laufende Pumpe 21$^I$ bzw. 23 nicht die Zentraldruckleitung 15 leer laufen lässt oder sogar leer saugt, aber es können (zumindest theoretisch) Situationen und Betriebsphasen eintreten, in denen das Hydraulikmittel 109 nicht für alle Verbraucher 29, 31, 41, 43, 45 ausreicht. Für solche Situationen und Fälle weist jede der Schaltungen 1, 1$^I$, 1$^{II}$, 1$^{III}$ nach den Figuren 2 bis 6 Vorrangschaltungen 103, 159, 179$^I$, 179$^{II}$, 179$^{III}$ auf, die den Hydraulikmittelstrom $Q_1$, $Q_2$, so wie z. B. in Figur 7 zu sehen ist, priorisiert. Z. B. kann auf eine Kühlung des Hydraulikmittels 109 über den Kühler 163 (siehe Figuren 2 bis 6) während kurzer Perioden, die beispielsweise nur wenige Sekunden dauern, verzichtet werden. Auch ist es möglich, die Ablassleitung 133, 135$^I$, die für ein Zurverfügungstellen von Kühlmittel bzw. Schmiermittel, z. B. für das Schmieren von Radsätzen, gestaltet sind, phasenweise nicht mit weiterem Hydraulikmittel 109 zu beschicken. Vorteilhaft ist es daher, den Kühler 163 der Vorrangschaltung 179$^I$, 179'' oder 179$^{III}$ nachzuschalten und abströmseitig des Kühlers 163 die Ablassleitung 133 bzw. 135$^I$ an diesen anzuschließen.

Der hydraulische Strang 7 umfasst ein Ventil 157, durch das weitere (nicht im Detail dargestellte) Komponenten eines Kraftfahrzeugs betätigt werden können.

Ob ein ausreichender Druck in der Zentraldruckleitung 15 vorherrscht, kann mit einem Drucksensor 129 überwacht werden. Übersteigt der Druck in der Zentraldruckleitung 15 einen maximalen Wert, so kann das hydraulisch eingespannte Vorranghydraulikkreisventil 159 selbsttätig aufgrund seiner Druckwaagengestalt Hydraulikmittel 109 über die Rücklaufleitung 151 abführen. Das Hydraulikmittel 109 kann ansaugseitig den Pumpen 21$^I$, 23 zur Verfügung gestellt werden. Die Hydraulikmenge, die die Pumpen 21$^I$, 23 nicht benötigen, fließt in den Tank 149. Die Hydraulikschaltung 1$^I$ (nach Figur 3) hat an mehr als zehn Stellen Rückleitungen Richtung Sumpf 149, wobei einige der Rückleitungen beschickt werden, wenn zu viel Hydraulikmittel 109 vorhanden sein sollte.

Im Falle einer nicht ausreichenden Versorgung mit Hydraulikmittel 109 sorgt das Sperrventil 103 (siehe Figuren 2 bis 6), das strömungsmäßig vor den Druckregelventilen 51, 53 sitzt, für eine Versorgung des ersten und zweiten Stellglieds 29, 31, während ein Kühlmittelstrom 110 entweder nur gedrosselt oder sogar ganz abgesperrt durch das Sperrventil 103 beeinflusst bzw. eingestellt wird.

Das Hauptsteuerventil 172 hat, wie in Figur 3 eingezeichnet, vier Ports 181, 183, 185, 187. Aus Figur 4 kann entnommen werden, dass noch ein weiterer Port, der Tankanschluss 189 vorhanden ist. Das Vorsteuerventil 171 bestimmt die Stellung bzw. den Schaltzustand des Hauptsteuerventils 172. In der Schaltstellung, die die Durchlassstellung 105 ist, gelangt nur ein gedrosselter Strom des Hydraulikmittels 109 in die dritte Ablassleitung 135, wenn es den Port 183 verlässt. Über den ersten Arbeitsport 181 gelangt Hydraulikmittel 109 auf dem Druckniveau der Zentraldruckleitung 15 zu den Druckregelventilen 51, 53. Welcher Druck in einer Zuleitung zum ersten und zum zweiten Stellglied 29, 31 herrscht, kann mittels Drucksensoren 125, 127 überwacht bzw. gemessen werden. In einer zweiten Durchflussstellung 105$^I$ kann ein Hydraulikmittelstrom $Q_1$ und ein Hydraulikmittelstrom $Q_2$ jeweils ungedrosselt an einen der Arbeitsports 181, 183 gelangen. In einer dritten Durchflussstellung 105" sperrt der Kolben des Hauptsteuerventils 172 den einen der beiden Hydraulikmittelströme $Q_1$, $Q_2$ und lässt nur den anderen Hydraulikmittelstrom $Q_1$ noch an dem dazugehörigen Arbeitsport 181 durch. Der Hydraulikzweig 65, der für die Versorgung der Stellglieder 29, 31 für die Kupplungsbetätigung zuständig ist, liefert Hydraulikmittel 109 über das Hauptsteuerventil 172 an die Druckregelventile 51, 53. Durch ein Verstellen des Hauptsteuerventils 172 kann gleichzeitig ein Hydraulikmittelfluss $Q_2$ mit beeinflusst werden. Außerdem kann die Stärke des Kühlmittelstroms 110$^I$ durch zwei Antiparallel geschaltete Schwarz-Weiß-Ventile beeinflusst werden. Zur Versorgung der Kupplungen, der Getriebekomponenten und ihrer Stellglieder 29, 31 mit Hydraulikmittel 109 als Betätigungsmittel, mit Hydraulikmittel 109 als Kühlmittel und mit Hydraulikmittel 109 als Schmiermittel kann in einem Zusammenspiel von drei Ventilen jeder der Ströme bzw. der Hydraulikmittelflüsse $Q_1$, $Q_2$, 110$^I$ bedarfsgerecht sowie entsprechend dem Angebot durch die Pumpen 21, 21$^I$, 23 angebotsgerecht eingestellt werden. Liefern die Pumpen 21, 21$^I$, 23 zuviel Druck oder einen zu großen Hydraulikmittelstrom in die Zentraldruckleitung 15, so kann der Anteil, der nicht benötigt wird bzw. der überschießend ist, über die Rücklaufleitung bzw. Rezirkulationsleitung 151 wieder gegen Tank 149 bzw. in Richtung zum Tank 149 abgeleitet werden.

Die Ventile 159, 103, die zur Schaffung von Vorrangschaltungen 179$^I$, 179$^{II}$, 179$^{III}$ vorhanden sind, übernehmen die Funktion eines Cut-Offs in einigen ihrer Schaltstellungen. Sie gehören somit zur Cut-Off-Ebene 25. Nachgeschaltete Ventile wie die Druckregelventile 51, 53 gehören zur Steuerebene 27.

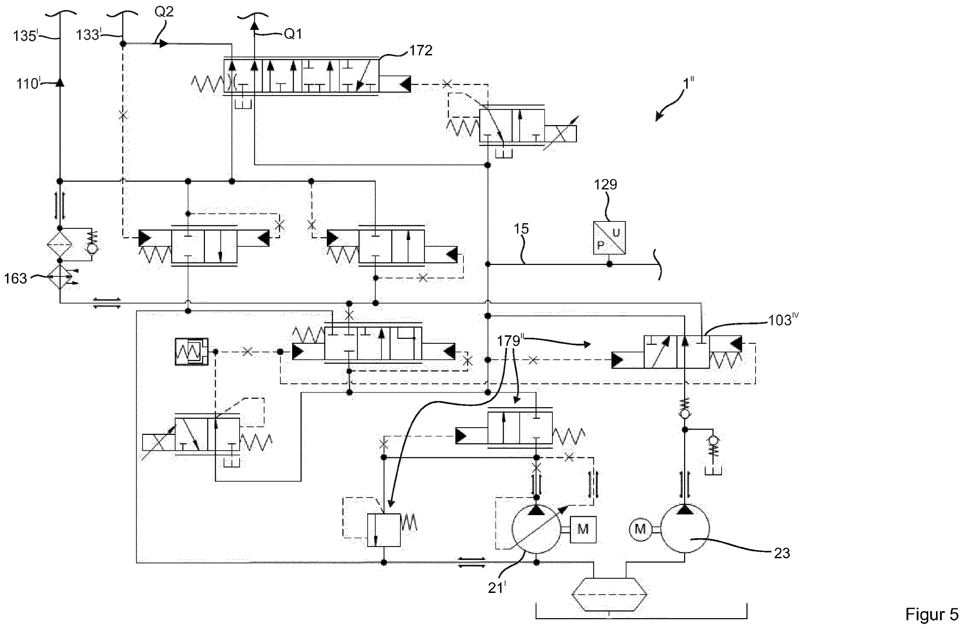

Die jeweilige Vorrangschaltung 179$^I$, 179", 179$^{III}$, die sich unmittelbar, d. h. nur über Leitungen verbunden an die Pumpen 21, 23 bzw. 21$^I$, 23 anschließt, hat ein Sperrventil 103$^I$, das ein einfaches Schwarz-Weiß-Ventil mit einem Zuleitungsanschluss und einem Arbeitsanschluss ist, und ein weiteres Sperrventil 103" (siehe Figur 2), 103$^{III}$ (siehe Figuren 3, 4 und 6), 103$^{IV}$ (siehe Figur 5). Das zweite Sperrventil 103$^{II}$, 103$^{III}$, 103$^{IV}$ der Vorrangschaltung 179$^I$, 179$^{II}$, 179$^{III}$ ist ein federvorgespanntes, hydraulisch zu betätigendes 3/2-Ventil, bei der die federbewegte Seite des Kolbens des Sperrventils 103", 103$^{III}$, 103$^{IV}$ wahlweise hydraulisch betätigt sein kann. Wie durch einen Vergleich der Figuren 4, 5, 6 zu erkennen ist, können dem Sperrventil 103", 103$^{III}$, 103$^{IV}$ noch ein oder mehrere Kugelsitzventile zugeordnet werden, die Rückflüsse zu und zu hohe Drücke abströmseitig der Pumpe 23 verhindern. Wie sich durch ein Vergleich der verbrennungsmotorisch angetriebenen Pumpen 21, 21$^I$ ergibt, kann die Pumpe 21$^I$ sich selbst druckmäßig regeln; alternativ kann die Pumpe 21 natürlich auch fremdgeregelt sein.

An der Zentraldruckleitung 15 ist sowohl die Vorrangschaltung 179, die sich aus dem einen einzigen Ventil 103 (ggf. mit Vorsteuerventil 171) aufbaut, als auch das Vorranghydraulikkreisventil 159 angeschlossen. Beide Ventile 159, 103 bestimmen den Druck in der Zentraldruckleitung 15 und an den Ablassleitungen 133, 133$^I$, 134, 135, 135$^I$.

Figur 7 verdeutlicht eine Druchfluss-Kennlinie abströmseitig des Ventils 172.

Die in den einzelnen Figuren gezeigten Ausgestaltungsmöglichkeiten lassen sich auch untereinander in beliebiger Form verbinden.

So ist es möglich, durch die Vorrangschaltung 179, in der Cut-Off-Ebene 25 angeordnet, die beiden mittels Hydraulikmittel vorhandenen Flüsse $Q_1$, $Q_2$ zu anderen Stellgliedern 33, 35, 37, 39, 41, 43, 45 durch mehrere Schaltstellungen 105, 107 zu beeinflussen, wobei die Durchflussstellung 105 z. B. fünf verschiedene Stellungen, wenigstens aber drei verschiedene Stellungen aufweisen kann. Der Hydraulikmittelfluss $Q_1$ ist der Fluss, der zu den Proportional-Druck-Regelventilen 51, 53, kurzum zu den Gangstellern 29, 31 geleitet wird. Der Hydraulikmittelfluss $Q_2$ ist der Fluss, der an die Ablassleitung 135 bzw. 133$^I$ weitergeleitet wird. Der Hydraulikmittelfluss $Q_1$ kann z. B. an dem ersten Arbeitsport 181 ermittelt werden. Der Hydraulikmittelfluss $Q_2$ kann z. B. an dem zweiten Arbeitsport 183 ermittelt werden. Das Diagramm der Figur 7 zeigt Volumina, nicht aber skaliert auf Drücke. D. h., die unterschiedlichen Druckniveaus sind nicht in dem Diagramm nach Figur 7 eingetragen, jedoch die Volumina in Abhängigkeit der Bestromung des Ventils 171. Mit steigendem elektrischem Strom an dem Ventil 171, das das Vorsteuerventil für das Hauptsteuerventil 172 ist, nimmt zunächst der Hydraulikmittelfluss $Q_2$ zu, bis er anschließend wieder versiegt. Der Hydraulikmittelfluss $Q_1$ steht unter-

dessen konstant zur Verfügung bis die Cut-Off-Funktion des Hauptsteuerventils 172 aufgrund eines erhöhten Wertes des elektrischen Stroms greift (vgl. Stellung 107).

Wie sich aus Figur 7 anschaulich ergibt, kann durch ein einziges Ventil 172 eine Beziehung zwischen den beiden Hydraulikmittelflüssen $Q_1$ und $Q_2$ durch ein Ansteuern eines Magneten mit einem elektrischen Strom I hergestellt werden.

**Bezugszeichenliste**

| Bezugszeichen | Bezeichnung |
| --- | --- |
| 1, $1^I$, $1^{II}$, $1^{III}$ | Hydraulikschaltung |
| 3 | Ansteuerung, insbesondere für Kupplungen, vorzugsweise des Doppelkupplungsgetriebes |
| 5, $5^I$ | Ansteuerung, insbesondere für Muffen |
| 7 | Ansteuerung, insbesondere für aerodynamische Kfz-Komponenten |
| 9 | Hydraulikmittelaufbereitung |
| 11, $11^I$ | Kupplungssteuerungsschaltung bzw. Strang für eine Kupplungssteuerung |
| 13, $13^I$ | Differentialansteuerung |
| 15 | Zentraldruckleitung bzw. Systemdruckleitung, insbesondere als Druckquelle |
| 17 | Teilgetriebesteuerung |
| 19 | Pumpengruppe, insbesondere als Druckquelle |
| 21, $21^I$ | erste Pumpe, insbesondere verbrennungsmotorisch angetriebene Pumpe |
| 23 | zweite Pumpe, insbesondere elektromotorisch angetriebene Pumpe |
| 25 | Cut-Off-Ebene |
| 27 | Steuerebene |
| 29 | erstes Stellglied, insbesondere ein federvorgespannter Differentialzylinder |
| 31 | zweites Stellglied, insbesondere ein federvorgespannter Differentialzylinder |
| 33 | drittes Stellglied, insbesondere ein federvorgespannter Differentialzylinder |
| 35 | viertes Stellglied, insbesondere ein federvorgespannter Differentialzylinder |
| 37 | fünftes Stellglied, insbesondere ein federvorgespannter Differentialzylinder |
| 39 | sechstes Stellglied, insbesondere ein federvorgespannter Differentialzylinder |
| 41 | siebtes Stellglied, insbesondere ein Gleichlaufzylinder mit wenigstens drei Stellungen |
| 43 | achtes Stellglied, insbesondere ein Gleichlaufzylinder mit wenigstens drei Stellungen |
| 45 | neuntes Stellglied, insbesondere ein Gleichlaufzylinder mit wenigstens drei Stellungen |
| 51 | erstes Druckregelventil |
| 53 | zweites Druckregelventil |
| 55 | Aktuator |

(fortgesetzt)

| Bezugszeichen | Bezeichnung |
|---|---|
| 57 | erster Kupplungsaktuator |
| 59 | zweiter Kupplungsaktuator |
| 61, 61$^I$ | dritter Kupplungsaktuator |
| 63, 63$^I$ | vierter Kupplungsaktuator |
| 65, 65$^I$, 65$^{II}$, 65$^{III}$, 65$^{IV}$, 65$^V$, 65$^{VI}$, 65$^{VII}$ | Hydraulikzweig |
| 67 | erste Bypass-Leitung |
| 68 | zweite Bypass-Leitung |
| 71 | erstes Sperrventil |
| 73 | zweites Sperrventil |
| 79 | Sperrzustand |
| 81, 81$^I$, 81$^{II}$, 81$^{III}$ 1$^{III}$ | Flussregelventil |
| 83 | Rückschlagsventil |
| 85 | Zuleitung |
| 87 | Überdruck |
| 89 | Durchflussrichtung |
| 91 | 3/3-federvorgespanntes Elektromagnetventil |
| 95 | Rückkopplung, insbesondere hydraulische Rückkopplung |
| 97 | Kolben |
| 99 | B-Seite oder Verbraucherseite |
| 101 | Versorgungsseite |
| 103, 103$^I$, 103", 103$^{III}$, 103$^{IV}$, 103$^V$ | Sperrventil, insbesondere federvorgespanntes Sperrventil |
| 105, 105$^I$, 105" | Durchflussstellung, insbesondere des Sperrventils |
| 107 | Ablassstellung, insbesondere des Sperrventils |
| 109 | Hydraulikmedium bzw. Hydraulikmittel |
| 110, 110$^I$ | Kühlmittelstrom |
| 111 | Ablaufstellung, insbesondere des 3/3-Ventils |
| 113 | Mittenstellung, insbesondere Trennstellung, z. B. eines 3/3-Ventils oder eines 4/3-Ventils |
| 114 | Durchflussrichtung |
| 115 | Durchflussstellung |
| 117 | erste Sumpfrückflussleitung |
| 119 | zweite Sumpfrückflussleitung |
| 121, 121$^I$, 121" | Feder, insbesondere Ventilfeder wie für ein 3/3-Ventil |
| 123, 123', 123" | Dämpfer, insbesondere federvorgespannter Dämpfer |
| 125 | erster Drucksensor |
| 127 | zweiter Drucksensor |
| 129, 129', 129" | dritter, vierter, fünfter Drucksensor |
| 133, 133$^I$ | erste Ablassleitung, insbesondere gedrosselte Ablassleitung |
| 134 | zweite Ablassleitung |
| 135, 135$^I$ | dritte Ablassleitung, insbesondere Kühlung, z. B. für Kupplungen |

(fortgesetzt)

| Bezugszeichen | Bezeichnung |
|---|---|
| 137 | Druckwaagenventil |
| 139 | Abschnitt, insbesondere der Hydraulikschaltung |
| 141 | erste Zuleitung |
| 143 | zweite Zuleitung |
| 145 | Arbeitsraum |
| 147 | Linearzylinder |
| 149 | Tank |
| 151 | Rücklaufleitung |
| 153 | Filter |
| 155, 155', 155" | Steuerventil, insbesondere für die Differentialsteuerung |
| 157 | Steuerventil, insbesondere für eine Steuerung aerodynamischer Komponenten |
| 159 | Vorranghydraulikkreisventil |
| 163 | Kühler |
| 167 | Steuerplatte |
| 169 | Steuerplattenrand |
| 170, 170$^{I}$ | Blende |
| 171, 171$^{I}$ | Vorsteuerventil |
| 172 | Hauptsteuerventil |
| 173, 173$^{I}$, 173", 173$^{III}$, 173$^{IV}$, 173$^{V}$ | Verbindungselement für Leitungen und/oder Hydraulikplatte, z. B. Steckverbindung, insbesondere mit integrierter Drossel |
| 177 | Steuerleitung |
| 179, 179', 179", 179$^{III}$ | Vorrangschaltung |
| 181 | erster Arbeitsport |
| 183 | zweiter Arbeitsport |
| 185 | erster Versorgungsport |
| 187 | zweiter Versorgungsport |
| 189 | Tankanschluss |
| $Q_1$ | hydraulischer Fluss, insbesondere aus dem ersten Arbeitsport |
| $Q_2$ | hydraulischer Fluss, insbesondere aus dem zweiten Arbeitsport |
| I | elektrischer Strom, insbesondere zur Ansteuerung eines Magneten eines Ventils wie dem Vorsteuerventil 171 |
| 500 | Antriebsstrang, insbesondere Hybridantriebsstrang |
| 501 | Verbrennungskraftmaschine |
| 503 | Elektromaschine |
| 505 | Doppelkupplungsgetriebe, insbesondere Pkw-Getriebe |
| 507 | erste Kupplung, insbesondere Trennkupplung |
| 509 | zweite Kupplung, insbesondere Trennkupplung |
| 511 | dritte Kupplung, insbesondere Trennkupplung |
| 513 | Kraftflussunterbrechung |

(fortgesetzt)

| Bezugszeichen | Bezeichnung |
|---|---|
| 515 | Eingangswelle, insbesondere koaxiale Doppelwelle |
| 517 | erste Vorgelegewelle |
| 519 | zweite Vorgelegewelle |
| 521 | Ausgangswelle |
| 523 | Differential, insbesondere in Käfigbauform |
| 525 | erste Schaltmuffe |
| 527 | zweite Schaltmuffe |
| 529 | dritte Schaltmuffe |
| 531 | erster Gangstellzylinder |
| 533 | zweiter Gangstellzylinder |
| 535 | erster Kupplungszylinder |
| 537 | zweiter Kupplungszylinder |
| 539 | erstes Zahnradpaar |
| 541 | zweites Zahnradpaar |
| 543 | drittes Zahnradpaar |
| 545 | Getriebegehäuse |
| 547 | Antriebswelle wie eine nach Außen geführte (mehrteilige) Kurbelwelle |

**Patentansprüche**

1. Verfahren zur Getriebesteuerung mit einer hydraulischen Schaltung (1) durch das mit Arbeitsdrücken operierende Stellglieder (29, 31, 33, 35, 37, 39, 41, 43, 45) der hydraulischen Schaltung (1) zur Betätigung von Getriebekomponenten wie Kupplungen (507, 509, 511), insbesondere Doppelkupplungen (507, 509) oder Antriebsstränge (500) mit mehr als zwei Reibkupplungen, angesteuertbar werden und

   durch das Hydraulikmittel (109) zur Kühlung (135) und/oder Schmierung (133) einzelner Getriebekomponenten (539, 541, 543) verteilt wird,
   mit einer Vorrangschaltung (179, 179$^I$, 179", 179$^{III}$, 159) in der hydraulischen Schaltung (1),
   durch die eine Priorisierung hydraulischer Flüsse (Q) in Abhängigkeit einer Schaltstellung (105, 105$^I$, 105", 107) wenigstens eines Ventils durchgeführt wird,
   **dadurch gekennzeichnet, dass**
   die Vorrangschaltung (179, 179$^I$, 179", 179$^{III}$, 159) durch Kolbenstellungen eines einzigen als Kolbenschieberventil (172) ausgestalteten Ventils (103) mit wenigstens zwei Arbeitsports (181, 183) und mit wenigstens zwei Druckversorgungsports (185, 187) einen Arbeitsdruck an einer Baugruppe (3) der Hydraulikschaltung (1) sowie einen Fluss (Q) eines Hydraulikmittels (109) mit einem vom Arbeitsdruck abweichenden Druckniveau, z. B. eines niedriger bedruckten Kühlmittelstroms (110, 110$^I$), über das Ventil (103) steuert,
   wobei das Ventil (103) ein erstes Vorrangwegeventil (171, 172) ist, das aktiv so angesteuert wird, dass ein sukzessives Verschließen seiner Arbeitsports (181, 183) stattfindet, wobei ein für eine Betätigung von Kupplungen (507, 509, 511) vorgesehener Arbeitsport (181) der zuletzt geschlossene Arbeitsport (181) ist.

2. Verfahren zur Getriebesteuerung nach Anspruch 1,
   **dadurch gekennzeichnet, dass**
   das Kolbenschieberventil (172) ein pilotgesteuertes (171) Kolbenschieberventil (172) und/oder ein 4/4-Cartridge-Ventil oder ein 5/4-Cartridge-Ventil ist.

3. Verfahren zur Getriebesteuerung nach einem der vorhergehenden Ansprüche,
   **dadurch gekennzeichnet, dass**

die Baugruppe eine hydraulisch betätigbare Kupplungsbaugruppe (3) ist, die mit wenigstens zwei, insbesondere einseitig federvorgespannten, Linearkolben (147) eine Lageveränderung von Kupplungsmitteln (507, 509, 511), wie Reibbelägen einer "normally-open-Kupplung", umsetzen kann.

4. Verfahren zur Getriebesteuerung nach einem der vorhergehenden Ansprüche,
   **dadurch gekennzeichnet, dass**
   in einer Ruhestellung (105) des einzigen Ventils (103) ein erster Hydraulikmittelstrom an die Baugruppe geleitet wird und gleichzeitig ein zweiter Hydraulikmittelstrom als Hydraulikmittel zur Kühlung und/oder Schmierung von der Vorrangschaltung (179, 179$^I$, 179", 179$^{III}$, 159) zur Verfügung gestellt wird.

5. Verfahren zur Getriebesteuerung nach einem der vorhergehenden Ansprüche,
   **dadurch gekennzeichnet, dass**
   das einzige Ventil (103), insbesondere in der Form eines Vorrangwegeventils (171, 172), funktionell ein Sperrventil (103) ist, das aktiv in einen Sperrzustand (107) zu versetzen ist.

6. Verfahren zur Getriebesteuerung nach einem der vorhergehenden Ansprüche,
   **dadurch gekennzeichnet, dass**
   das einzige Ventil (103) wenigstens vier Zustände (105, 105$^I$, 105", 107) umfasst, von denen drei Zustände (105, 105$^I$, 105$^{II}$) einen Hydraulikmittelfluss in wenigstens eine von zwei Verbraucherleitungen durchlassen.

7. Verfahren zur Getriebesteuerung nach einem der vorhergehenden Ansprüche,
   **dadurch gekennzeichnet, dass**
   das einzige Ventil (103) für einen Arbeitsdruck gestaltet ist, der um wenigstens mehrere Bar über dem abweichenden Druckniveau liegt.

8. Verfahren zur Getriebesteuerung nach einem der vorhergehenden Ansprüche 2 bis 7,
   **dadurch gekennzeichnet, dass**

   das einzige Ventil in der Ruhestellung des Kolbens Durchlässe zu beiden Arbeitsports (181, 183) aufweist,
   wobei in einer ersten betätigten Stellung, die der Ruhestellung (105$^I$) folgt, ein zweiter Durchlasszustand zu beiden Arbeitsports (181, 183) folgt und
   wobei in einer zweiten betätigten Stellung (105$^{II}$), in der eine energetisch höhere, z. B. durch ein längeres aktives Tastverhältnis gegebene, Ansteuerung an dem einzigen Ventil vorhanden ist, nur noch ein Durchlass zu einem der beiden Arbeitsports (181) gegeben ist.

9. Verfahren zur Getriebesteuerung nach einem der vorhergehenden Ansprüche 2 bis 8,
   **dadurch gekennzeichnet, dass**
   in einer Sperrstellung (107) eine hydraulische Entlastung des einen Arbeitsports (181) gegen einen Tank (149) geschaltet ist, während der andere Arbeitsport (183) hydraulisch abgekoppelt von einer Versorgungsseite ist.

10. Verfahren zur Getriebesteuerung nach Anspruch 9,
    **dadurch gekennzeichnet, dass**
    in der Sperrstellung (107) des Vorrangwegeventils eine Schnellentladung (67, 68) gegen den Tank (149) über das Vorrangwegeventil (172) vorgesehen ist, während Hydraulikmittel (109) in wenigstens einer Leitung (135), die an dem anderen Arbeitsport (183) angeschlossen ist, entkoppelt und abgesperrt verbleibt.

## Claims

1. Method for controlling a transmission by means of a hydraulic circuit (1),

   by which operating elements (29, 31, 33, 35, 37, 39, 41, 43, 45) of the hydraulic circuit (1), which operate at working pressures, are addressed in order to operate transmission components such as clutches (507, 509, 511), in particular dual clutches (507, 509) or drivetrains (500) having more than two friction clutches, and
   by which hydraulic medium (109) for cooling (135) and/or lubricating (133) individual transmission components (539, 541, 543) is distributed,
   having a priority circuit (179, 179$^I$, 179", 179$^{III}$ , 159) in the hydraulic circuit (1),
   by which hydraulic flows (Q) are prioritized depending on a switch position (105, 105$^I$, 105", 107) of at least one valve,
**characterized in that**
the priority circuit (179, 179ᴵ, 179", 179ᴵᴵᴵ, 159), by way of piston positions of a single valve (103) designed as a piston slide valve (172) having at least two working ports (181, 183) and at least two pressure supply ports (185, 187), controls via the valve (103) a working pressure on an assembly (3) of the hydraulic circuit (1) as well as a flow (Q) of a hydraulic medium (109) at a pressure level differing from the working pressure, for example a lower-pressure coolant stream (110, 110ᴵ),
wherein the valve (103) is a first priority directional control valve (171, 172) that is actively actuated such that the working ports (181, 183) thereof are successively closed, a working port (181) provided for operating clutches (507, 509, 511) being the working port (181) closed last.

2. Method for controlling a transmission according to claim 1,
**characterized in that**
the piston slide valve (172) is a pilot-controlled (171) piston slide valve (172) and/or a 4/4 cartridge valve or a 5/4 cartridge valve.

3. Method for controlling a transmission according to any one of the preceding claims,
**characterized in that**
the assembly is a hydraulically operated clutch assembly (3) which, by means of at least two linear pistons (147), which in particular are spring-preloaded on one side, can implement a change in position of clutch means (507, 509, 511), such as friction linings of a "normally open clutch".

4. Method for controlling a transmission according to any one of the preceding claims,
**characterized in that,**
in a rest position (105) of the single valve (103), a first hydraulic medium stream is directed to the assembly and, at the same time, a second hydraulic medium stream is provided by the priority circuit (179, 179', 179", 179"', 159) as hydraulic medium for cooling and/or lubrication purposes.

5. Method for controlling a transmission according to any one of the preceding claims,
**characterized in that**
the single valve (103), in particular in the form of a priority directional control valve (171, 172), is in functional terms a stop valve (103) which must actively be placed in a blocking state (107).

6. Method for controlling a transmission according to any one of the preceding claims,
**characterized in that**
the single valve (103) has at least four states (105, 105', 105", 107), of which three states (105, 105', 105") permit a flow of hydraulic medium into at least one of two consumer lines.

7. Method for controlling a transmission according to any one of the preceding claims,
**characterized in that**
the single valve (103) is designed for a working pressure which is at least several bar above the differing pressure level.

8. Method for controlling a transmission according to any one of the preceding claims 2 to 7,
**characterized in that,**

in the rest position of the piston, the single valve has passages to both working ports (181, 183),
wherein, in a first actuated position following the rest position (105ᴵ), a second passage state to both working ports (181, 183) follows, and
wherein, in a second actuated position (105"), in which an energetically higher activation, for example due to a longer active duty cycle, is present at the single valve, only a passage to one of the two working ports (181) is still given.

9. Method for controlling a transmission according to any one of the preceding claims 2 to 8,
**characterized in that,**
in a blocking position (107), a hydraulic load relief of one working port (181) is switched towards a tank (149), while the other working port (183) is hydraulically decoupled from a supply side.

**10.** Method for controlling a transmission according to claim 9,
**characterized in that,**
in the blocking position (107) of the priority directional control valve, a rapid discharge (67, 68) towards the tank (149) via the priority directional control valve (172) is provided, while hydraulic medium (109) in at least one line (135), which is connected to the other working port (183), remains decoupled and blocked.

**Revendications**

**1.** Procédé pour la commande de transmission avec un circuit hydraulique (1) par lequel des organes de réglage (29, 31, 33, 35, 37, 39, 41, 43, 45) du circuit hydraulique (1) qui opèrent avec des pressions de travail sont commandés pour l'actionnement de composants de transmission comme des embrayages (507, 509, 511), en particulier des doubles embrayages (507, 509) ou des tronçons d'entraînement (500) avec plus de deux embrayages à friction, et par lequel un moyen hydraulique (109) pour un refroidissement (135) et/ou une lubrification (133) de composants de transmission individuels (539, 541, 543) est distribué, avec un circuit prioritaire (179, 179', 179", 179"', 159) dans le circuit hydraulique par lequel une priorisation de flux hydrauliques (Q) est effectuée en fonction d'une position de commutation (105, 105', 105", 107) d'au moins une soupape, **caractérisé en ce que**

le circuit prioritaire (179, 179', 179", 179"', 159) commande, par des positions de piston d'une seule soupape (103) équipée en tant que soupape à tiroir de piston (172) avec au moins deux ports de travail (181, 183) et avec au moins deux ports d'alimentation en pression (185, 187), une pression de travail sur un ensemble (3) du circuit hydraulique (1) ainsi qu'un flux (Q) d'un moyen hydraulique (109) via la soupape (103) avec un niveau de pression qui diffère de la pression de travail, par exemple d'un courant de moyen de refroidissement (110, 110') avec une pression plus faible,
dans lequel la soupape (103) est une première soupape directionnelle prioritaire (171, 172) qui est commandée activement de telle sorte qu'une fermeture successive de ses ports de travail (181, 183) ait lieu,
cependant qu'un port de travail (181) prévu pour un actionnement d'embrayages (507, 509, 511) est le port de travail (181) fermé en dernier.

**2.** Procédé pour la commande de transmission selon la revendication 1, **caractérisé en ce que** la soupape à tiroir de piston (172) est une soupape à tiroir de piston (172) à commande pilote (171) et/ou une soupape à cartouche 4/4 ou une soupape à cartouche 5/4.

**3.** Procédé pour la commande de transmission selon l'une des revendications précédentes, **caractérisé en ce que** l'ensemble est un ensemble d'embrayages (3) pouvant être actionné hydrauliquement qui peut, avec au moins deux pistons linéaires (147), en particulier précontraints unilatéralement par un ressort, mettre en œuvre un changement de position de moyens d'embrayage (507, 509, 511) comme des garnitures de friction d'un embrayage normalement ouvert.

**4.** Procédé pour la commande de transmission selon l'une des revendications précédentes, **caractérisé en ce que**, dans une position de repos (105) de la soupape unique (103), un premier flux de moyen hydraulique est dirigé sur l'ensemble et que simultanément un second flux de moyen hydraulique est mis à disposition comme moyen hydraulique pour le refroidissement et/ou la lubrification du circuit prioritaire (179, 179', 179", 179"', 159).

**5.** Procédé pour la commande de transmission selon l'une des revendications précédentes, **caractérisé en ce que** la soupape unique (103), en particulier sous forme d'une soupape directionnelle prioritaire (171, 172), est sur le plan fonctionnel une soupape d'arrêt (103) qui doit être mise activement dans un état de blocage (107).

**6.** Procédé pour la commande de transmission selon l'une des revendications précédentes, **caractérisé en ce que** la soupape unique (103) comprend au moins quatre états (105, 105', 105", 107) dont trois états (105, 105', 105") laissent passer un flux de moyen hydraulique dans au moins une de deux conduites de consommation.

**7.** Procédé pour la commande de transmission selon l'une des revendications précédentes, **caractérisé en ce que** la soupape unique (103) est conçue pour une pression de travail qui se situe au moins quelques bars au-dessus du niveau de pression qui diffère.

**8.** Procédé pour la commande de transmission selon l'une des revendications précédentes 2 à 7, **caractérisé en ce que** la soupape unique présente, en position de repos du piston, des passages vers les deux ports de travail (181, 183), cependant que suit, dans une première position actionnée qui suit la position de repos (105'), un second état de passage vers les deux ports de travail (181, 183) et cependant que, dans une seconde position actionnée (105") dans laquelle il existe une commande d'un niveau énergétique plus élevé de la seule soupape, qui est par exemple donnée par un rapport cyclique actif plus long, il n'existe plus qu'un passage vers l'un des deux ports de travail (181).

9. Procédé pour la commande de transmission selon l'une des revendications précédentes 2 à 8, **caractérisé en ce que**, dans une position de blocage (107), il y a commutation d'un délestage hydraulique de l'un des ports de travail (181) par rapport à un réservoir (149) tandis que l'autre port de travail (183) est découplé hydrauliquement d'un côté alimentation.

10. Procédé pour la commande de transmission selon la revendication 9, **caractérisé en ce qu'**il est prévu, dans la position de blocage (107) de la soupape directionnelle prioritaire, une décharge rapide (67, 68) par rapport au réservoir (149) par la soupape directionnelle prioritaire (172) tandis qu'il reste du moyen hydraulique (109) découplé et bloqué dans au moins une conduite (135) qui est raccordée à l'autre port de travail (183).

EP 3 516 272 B2

Figur 1

Figur 2

Figur 3

Figur 4

30

Figur 5

Figur 6

EP 3 516 272 B2

Figur 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202016105346
- DE 202016105345
- DE 102010036545
- DE 102006016397 B4
- EP 2557336 A2
- WO 2011015182 A1
- DE 102010032657 A1
- WO 2012152397 A1
- DE 102013008740 A1
- DE 102011100862 A1
- DE 102005015911 A1